# EUROPEAN PATENT APPLICATION

(11) **EP 4 699 964 A1**
(43) Date of publication of application: **25.02.2026**
(21) Application number: 24792720.5
(22) Date of filing: 18.04.2024
(51) Int. Cl.: B65G 39/06, B65G 39/02, B65G 39/04

(54) **ROTARY MEMBER FOR CONVEYANCE, CONVEYOR DEVICE, AND ROLLER MEMBER**

(30) Priority: 20.04.2023 JP 2023069680; 15.06.2023 JP 2023098195; 17.11.2023 JP 2023195995; 28.02.2024 JP 2024028677
(71) Applicant: Itoh Denki Co., Ltd., Kasai-shi, Hyogo 675-2302 (JP)
(72) Inventor: ITOH Kazuo, Kasai-shi, Hyogo 679-0105 (JP); UEDA Koji, Kasai-shi, Hyogo 679-0105 (JP); NISHIMURA Atsushi, Kasai-shi, Hyogo 679-0105 (JP)
(74) Representative: Meissner Bolte Partnerschaft mbB
(86) International application number: PCT/JP2024/015381
(87) International publication number: WO 2024/219448

(57) **Abstract**

The present invention provides a rotary member for conveyance, a conveyor device, and an inclined conveyor that softens the impact of collision and so on and that are less likely to generate sound or damage an object.

The rotary member for conveyance that comes in contact with an object to move the object includes: a shaft member; and a roller member. The roller member includes: an outer circumference that comes in contact with the object; and a boss part that allows the shaft member to be inserted thereinto. A cavity and a neck section are provided between the outer circumference and the boss part.

## Description

### TECHNICAL FIELD

The present invention relates to a rotary member for conveyance and a roller member used in a conveyor device. The invention also relates to a conveyor device using a rotary member for conveyance.

### BACKGROUND ART

A roller conveyor device is one of conveyor devices. The roller conveyor device includes rotary members for conveyance such as rollers arranged in parallel between frames. The roller conveyor device rotates the rollers with power to energize and move an object on the rollers.

### PRIOR ART DOCUMENTS

### PATENT DOCUMENTS

Patent Document 1: JP 2018 - 135 180 A
Patent Document 2: JP 2003 - 327 321 A

### DISCLOSURE OF INVENTION

### TECHNICAL PROBLEM

The roller described in Patent Document 1 is constituted of a metal tube, and rotates the metal tube to move a conveyance part. The rotary member for conveyance of the prior art is made of metal and thus has a hard surface. Therefore, when an object is input, there is a concern that the object may be damaged. In addition, sound may be generated when an object collides with the conveying roller.

In particular, there is a concern that the conveyor device may generate sound or damage an object when it is used in an inclined posture. For example, there may be a conveyor line on the upper floor and another conveyor line on the lower floor, and the conveyor device may be installed in an inclined position between the upper and lower floors. For convenience of description, a conveyor device installed in an inclined position is referred to as an inclined conveyor device. For example, when moving an object from the upper floor to the lower floor, the conveyor line on the upper floor conveys the object to an end portion on the upper floor side of the inclined conveyor device. Then, the inclined conveyor device is driven to bring down the object to the conveyor line of the lower floor.

Here, the conveying surface of the inclined conveyor device is inclined, whereas the conveying surface of the conveyor line of the lower floor is horizontal. Therefore, an angle is created between the conveying surface of the inclined conveyor device and the delivery surface of the conveyor line of the lower floor, and when the conveyed objects are passed from the inclined conveyor device to the conveyor device on the lower floor, a corner of the object may strike the delivery surface of the conveyor line on the lower floor. As a result, sound may be generated or the object may be damaged.

According to Patent Document 2, a wheel is used as the rotary part for conveyance, and the wheel is made of polyacetal or other resin to prevent damage to an object. However, polyacetal resin is also hard, so it does not completely prevent damage to the object, and there is still the possibility of collision sound.

The present invention solves the above problems of conventional technology. Accordingly, the objective of the present invention is to provide a rotary member for conveyance, a conveyor device, and an inclined conveyor device that are less likely to generate collision sound and damage to an object by softening the impact of collision and so on.

### SOLUTION TO PROBLEM

An aspect for solving the above problem is a rotary member for conveyance that comes in contact with an object to move the object, including: a shaft member; and a roller member, the roller member including: an outer circumference that comes in contact with the object; and a boss part that allows the shaft member to be inserted thereinto, a cavity being provided between the outer circumference and the boss part ,a neck section being provided between the outer circumference and the boss part.

The present aspect of a rotary member for conveyance has an internal cavity that allows a roller member to easily deform when an object is involved in a collision, softening the impact of the collision. As a result, even when an object is involved in a collision, it is unlikely to generate sound. It is also less likely to damage the conveyance part. In particular, a rotary member for conveyance of the present aspect has a neck section between the outer circumference and the boss part, so that when the outer circumference receive an impact, the area near the neck section bends and absorbs the impact.

In the above-described aspect, it is desirable that a wall thickness in a vicinity of the neck section is thinner than a wall thickness of the outer circumference.

In the rotary member for conveyance of the present aspect, since a wall thickness in the vicinity of the neck section is thinner than that of the outer circumference, the vicinity of the neck section bends more easily, thus absorbing impact more effectively.

Another aspect for solving the same problem is a rotary member for conveyance that comes in contact with an object to move the object, including: a shaft member; and a roller member, the roller member including: an outer circumference that comes in contact with the object; and a boss part that allows the shaft member to be inserted thereinto, a cavity being provided between the outer circumference and the boss part, a connecting part that extends axially being provided between the outer circumference and the boss part.

The present aspect of a rotary member for conveyance has an internal cavity, which allows roller member to easily deform when an object is involved in a collision, further softening the impact of the collision. As a result, even when the objects involved in a collision, it is unlikely to generate sound. It is also less likely to damage the conveyance part. In particular, the rotary member for conveyance of the present aspect has an axially extending connecting part between the outer circumference and the boss part, so that when the outer circumference receive an impact, the connecting part bends and absorbs the impact.

In each of the above-described aspects, desirably, a wall thickness of the connecting part is thinner than a wall thickness of the outer circumference.

In the rotary member for conveyance of the present aspect, since the wall thickness of the connecting part is thinner than that of the outer circumference, the connecting part bends easily and more effectively absorbs the impact.

In each of the above-described aspects, desirably, the roller member includes: a perimeter wall constituting the outer circumference; and a connecting wall that connects the perimeter wall to the boss part, the connecting wall including: a side wall that extends from an end portion of the perimeter wall toward the boss part; a longitudinal wall that is erected radially from a position of the boss part, the position being located more center than the end portion of the perimeter wall; and a joining wall that connects the side wall to the longitudinal wall.

According to the rotary member for conveyance of the present aspect, the joining wall in particular bends to absorb the impact.

In each of the above-described aspects, desirably, a wall thickness of the joining wall is thinner than a wall thickness of the perimeter wall.

In the rotary member for conveyance of the present aspect, since the wall thickness of the joining wall is thinner than that of the outer circumference, the connecting part bends easily and more effectively absorb the impact.

In each of the above-described aspects, desirably, a reinforcing member is provided in the cavity, and a gap is provided between the reinforcing member and an inner surface of the outer circumference.

Since the rotary member for conveyance of the present aspect is hollow inside, the outer circumference itself also bends to absorb the impact. However, excessive deformation of the outer circumference will interfere with the conveyance of an object. The rotary member for conveyance of the present aspect has a reinforcing member in the cavity and a gap between the reinforcing member and the inner surface of the outer circumference. Therefore, even when force is received from the object, the deformation of the outer circumference is limited to the size of the gap between the reinforcing member and the inner surface of the outer circumference, limiting the amount of deformation of the outer circumference. Thus, even when subjected to strong force from the object, the outer circumference is not excessively deformed and has little adverse effect on conveyance.

In each of the above-described aspects, desirably, the reinforcing member is annular, and a groove is provided in the cavity, the reinforcing member being engaged with the groove.

In the rotary member for conveyance of the present aspect, the reinforcing member is annular and is engaged with the groove of the cavity. This makes it difficult for the reinforcing members to move.

In each of the above-described aspects, desirably, the roller member includes a plurality of roller pieces, the roller pieces being combined together to constitute the roller member.

The rotary member for conveyance of the present aspect is easy to fabricate.

In each of the above-described aspects, desirably, the rotary member for conveyance includes a plurality of the roller members each having an uneven surface, the shaft member being inserted into the roller members in a different posture where the uneven surface has a different phase.

According to the present aspect, the object is less likely to be impacted because there is more opportunity for any part of the object to be held by any of protrusions of uneven surface.

In each of the above-described aspects, desirably, the shaft member is provided with the roller member and an attached member, the shaft member being configured to be engaged with the roller member and/ or any of the attached members to allow the roller member and the attached member to rotate integrally, and the attached member is chosen from following members: (1) a space retaining member provided between the roller members; (2) a passive side engaging member receiving power transmission from the drive member; (3) a drive side engaging member transmitting power to another member; and (4) a positioning member.

According to the present aspect, the shaft member and the roller member do not rotate relatively to each other, resulting in less wear of the roller member.

In each of the above-described aspects, desirably, the rotary member for conveyance includes a plurality of the roller members that are directly or indirectly engaged with each other, so that the plurality of the roller members rotate integrally.

According to the present aspect, the roller members rotate smoothly.

In each of the above-described aspects, desirably, the shaft member is provided with the roller member and an attached member, the shaft member being configured to be engaged with the roller member and/ or any of the attached members to regulate an axial movement of the shaft member, and the attached member is chosen from following members: (1) a space retaining member provided between the roller members; (2) a passive side engaging member receiving power transmission from the drive member; (3) a drive side engaging member transmitting power to another member, and (4) a positioning member.

According to the present aspect, the shaft member can be prevented from falling off.

According to another aspect, provided is a conveyor device including the rotary member for conveyance according to any of the description above are arranged in parallel.

In the above described aspect of the conveyor device, desirably a support member is provided under the rotary member for conveyance, the support member normally being not in contact with the rotary member for conveyance, the support member coming in contact with the rotary member for conveyance when the rotary member for conveyance bends.

According to the present aspect, excessive deformation as well as plastic deformation of the rotary member for conveyance can be prevented when excessive load is applied.

According to the present aspect, the roller member easily deforms when a conveyed object is involved in a collision, thereby the impact of the collision is softened. As a result, it is less likely to damage the conveyance part.

Another aspect for solving the above problem is a roller member that allows a shaft member to be inserted thereinto for rotation of the roller member, thereby coming in contact with an object to move the object, the roller member including: an outer circumference that comes in contact with the object; and a boss part that allows the shaft member to be inserted thereinto, wherein a cavity is provided between the outer circumference and the boss part, and wherein a neck section is provided between the outer circumference and the boss part.

Another aspect for solving the above problem is a roller member that allows a shaft member to be inserted thereinto for rotation of the roller member, thereby coming in contact with an object to move the object, the roller member including: an outer circumference that comes in contact with the object; and a boss part that allows the shaft member to be inserted thereinto, wherein a cavity is provided between the outer circumference and the boss part, and wherein a connecting wall that extends axially is provided between the outer circumference and the boss part.

In each of the above-described aspects, desirably, a reinforcing member is provided in the cavity, and a gap is provided between the reinforcing member and an inner surface of the outer circumference.

In each of the above-described aspects, desirably, the roller member includes a hollow outer body; and a reinforcing member, wherein numerous grooves extending in an axial direction are provided on the outer circumference of the outer body, the grooves existing only on both end portions of the outer circumference in the axial direction.

When the grooves on the outer circumference are provided along the entire length in the axial direction, they tend to make a sound when a object passes over the edges of the grooves. According to the present aspect, since the grooves are provided only at the axial end portions in the axial direction at the outer circumference, the sound can be suppressed.

In the above-described aspect, desirably, the grooves exist only to a position of approximately 1/4 length of the outer circumference from an end of the outer circumference in the axial direction.

When the grooves are provided only until a position approximately 1/4 length of the outer circumference from an end of the outer circumference in the axial direction, the area where the edges of the grooves come in contact with the object is reduced, thereby any sound caused by contact between the edges of the grooves and the object being eliminated.

According to another aspect, provided is a conveyor device arranged the rotary members for conveyance according to any of the description above in parallel, wherein the rotary members for conveyance each have a large diameter portion and a small diameter portion, wherein the rotary members for conveyance include a first and a second rotary members for conveyance arranged adjacently, and wherein the large diameter portion of the first rotary member for conveyance is located at a position corresponding to the small diameter portion of the second rotary member for conveyance.

According to another aspect, provided is a conveyor device that includes a plurality of independent short conveyor devices, wherein the short conveyor device is provided with the rotary members for conveyance according to any of the description above in parallel, wherein the rotary members for conveyance each have a large diameter portion and a small diameter portion,
wherein the short conveyor devices are connected in series to constitute a series of a conveying passage, wherein the plurality of short conveyor devices include a first and a second short conveyor devices that are connected in series, and wherein at a connection portion of the first and the second short conveyor devices, the large diameter portion of the rotary member for conveyance disposed at an end of the first short conveyor device is located at a position corresponding to the small diameter portion of the rotary member for conveyance disposed at an end of the second short conveyor device.

A conveyor device of the present aspect can convey a small object because of the small gaps in the conveying surface.

According to another aspect, provided is a conveyor device that includes a plurality of independent short conveyor devices, wherein the short conveyor device is provided with the rotary members for conveyance each having a large diameter portion and a small diameter portion in parallel, wherein the short conveyor devices are connected in series to constitute a series of a conveying passage, wherein the plurality of short conveyor devices include a first and a second short conveyor devices, and wherein at an connecting part of the short conveyor devices, the large diameter portion of the rotary member for conveyance disposed at an end of the first short conveyor device is located at a position corresponding to the small diameter portion of the rotary member for conveyance disposed at an end of the second short conveyor device.

The purpose of the present aspect is to provide a device that conveys an object having a small outer shape without delay. Due to smaller gaps, the conveyor device of the present aspect prevents an object from falling between the rotary members even though the object has a small outer shape. In addition, the conveyor device of the present aspect has valleys between adjacent rotary members for conveyance that are discontinuous in the width direction of the conveyor device. Therefore, even when conveying an object with a small outer shape, it is difficult that the object falls between rotary members for conveyance.

### EFFECT OF INVENTION

The rotary member for conveyance, the conveyor device, and the roller member of the present invention have an effect of softening impact and preventing an object from damaging.

### BRIEF DESCRIPTION OF DRAWINGS

Fig. 1 is a perspective view of a conveying roller (rotary member for conveyance) according to an embodiment of the present invention.
Fig. 2A is a front view of a conveying roller according to an embodiment of the present invention, and Fig. 2B is an A-A sectional view of an end portion thereof.
Fig. 3 is an exploded perspective view of the conveying roller of Fig. 1.
Fig. 4 is a perspective view of a roller member of the conveyance roller of Fig. 1.
Fig. 5 is a front view of the roller member of the conveyance roller of Fig. 1.
Fig.6A is an exploded perspective view of the roller member, and Fig. 6B is a perspective view of the roller member on the way of the process of being combined.
Fig. 7A is a sectional view of the roller member which shows the state where there is no conveying object on the roller member, and Fig. 7B is a sectional view of the roller member which shows the state where the roller member has received an impact from the object.
Fig. 8 is a perspective view of a pulley member.
Fig. 9A is a perspective view of an end portion side space retaining member viewed from the roller member side, and Fig. 9B is a perspective view of the end portion side space retaining member viewed from the pulley member side.
Fig. 10A is a perspective view of an intermediate space retaining member, Fig. 10B is a side view of the intermediate space retaining member from direction A, and Fig. 10C is a side view of the intermediate space retaining member from direction B.
Fig. 11 is a perspective view of a holding member.
Fig. 12 is a plan view of an inclined conveyor device according to an embodiment of the present invention, showing a state where an anti-detach member is removed.
Fig. 13 is a partial perspective view of an assembly procedure for the inclined conveyor device shown in Fig. 12.
Fig. 14 is a sectional view of the inclined conveyor device shown in Fig. 12, with the anti-detach member attached.
Fig. 15 is a plan view of the inclined conveyor device according to another embodiment of the present invention, showing a state where the anti-detach member is removed.
Fig. 16 is a perspective view of a roller member of a conveying roller according to another embodiment of the present invention.
Fig. 17 is an exploded perspective view of a roller member of the conveyance roller according to another embodiment of the present invention.
Fig. 18 is a sectional view of the roller member of Fig. 17.
Fig. 19A is a plan view of an inclined conveyor device of another embodiment of the present invention, and Fig. 19B is a front view thereof.
Figs 20A and 20B show the inclined conveyor device shown in Fig. 19 with an excessively heavy load placed on it, wherein Fig. 20A is its plan view and Fig 20B is its front view.
Fig. 21 is an exploded perspective view of the inclined conveyor device of Fig. 19.
Fig. 22 is a perspective view of a roller member of a conveying roller of another embodiment of the present invention.
Fig. 23 is a perspective view of a roller member of a conveying roller according to yet another embodiment of the present invention.
Fig. 24 is a plan view of a conveyor device according to an embodiment of the present invention.
Fig. 25 is an enlarged view of the conveyor device of Fig. 24.
Fig. 26A is a perspective view of the conveyor device of Fig. 24, and Fig. 26B is a perspective view of a conventional roller conveyor device.
Fig. 27 is an exploded view of the conveyor device of Fig. 24.
Fig. 28 is a perspective view of a conveying roller according to another embodiment of the present invention.
Figs. 29A, 29B, and 29C are perspective views of a roller member according to other embodiments of the present invention, Fig. 29A having a convex shape on the periphery, Fig. 29B having a suction cup on the periphery, and Fig. 29C having a wrinkle shape on the periphery.
Figs. 30A, 30B, and 30C are perspective views of a roller member according to further other embodiments of the present invention, Fig. 30A having a diagonal groove on the periphery, Fig. 30B having a circumferential groove on the periphery and a diagonal groove in the length direction, and Fig. 30C having an eccentric outer body.
Fig. 31 is a perspective view of a roller member according to another embodiment of the present invention where the outer body has a rectangular shape.
Figs. 32A and 32B are sectional views of a roller member according to another embodiment of the present invention, wherein Fig. 32A shows a state where there is no object to be conveyed on the roller member and Fig. 32B shows the state where the roller member is impacted by an object.
Fig. 33 is a view of the conveyor device of the present invention having a top plate thereon.
Fig. 34 is a schematic plan view of a conveyor device of the present invention having a curved path, wherein pulley members and a transmission belt are installed outside the frame piece.
Fig. 35 is a schematic plan view of a conveyor device having a curved path according to an embodiment of the present invention, wherein a diameter of the roller member located on the outer side is larger than that of the roller member located on the inner side.
Fig. 36 is a perspective view of a conveying roller according to an embodiment of the present invention, wherein the roller members are arranged without a gap in the axial direction.
Fig. 37 is a plan view of the inclined conveyor device of Fig. 12, showing an embodiment of the conveying roller arranged without a gap.
Fig. 38 is a perspective view of conveyor devices of the present invention when applied to a lifting device, showing a state where the conveyor devices are separated into upper and lower parts.
Fig. 39 is a perspective view of the conveyor device in a state where the conveyor devices of Fig. 38 move up or down to become the same height.
Fig. 40 is a perspective view of the conveying rollers of the present invention in a state where the conveying rollers are used in an unmanned conveyor vehicle.

### BEST MODE FOR CARRYING OUT THE INVENTION

Hereinafter, an embodiment of the present invention will be described.

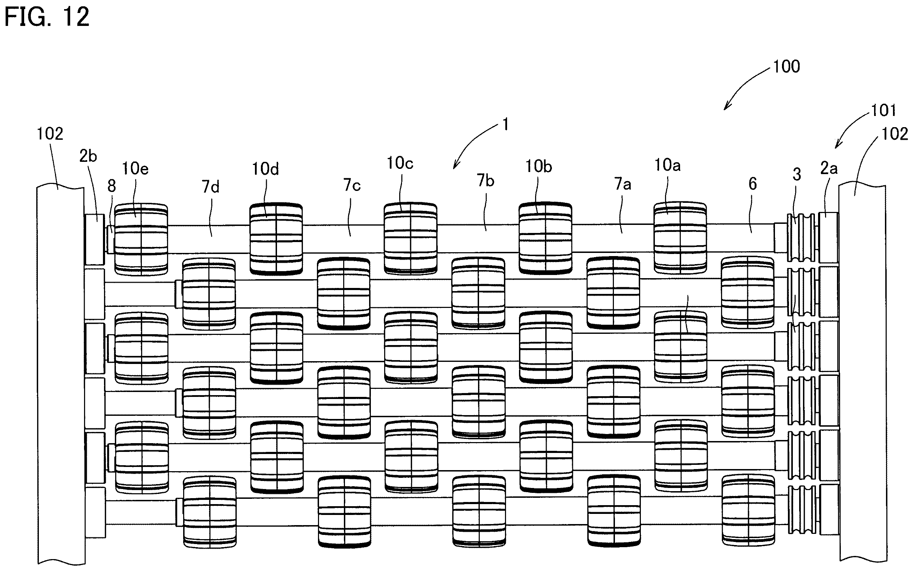

A conveying roller (rotary member for conveyance) 1 of the present embodiment is a member constituting a conveying surface of a conveyor device (conveyance device) 100, as shown in Fig. 12. The conveyor device 100 may be arranged in a tilted position or in a horizontal position.

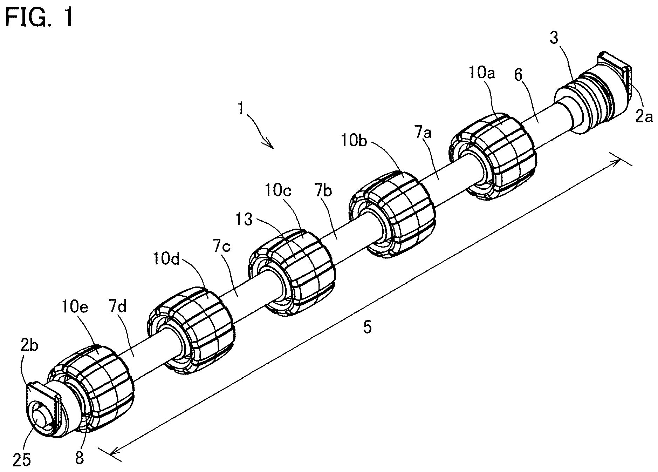

The conveying roller 1 has a holding member 2 at both ends, a pulley member 3 inside the holding member 2 at one end, and a conveyance part 5 in the middle, as shown in Fig. 1.

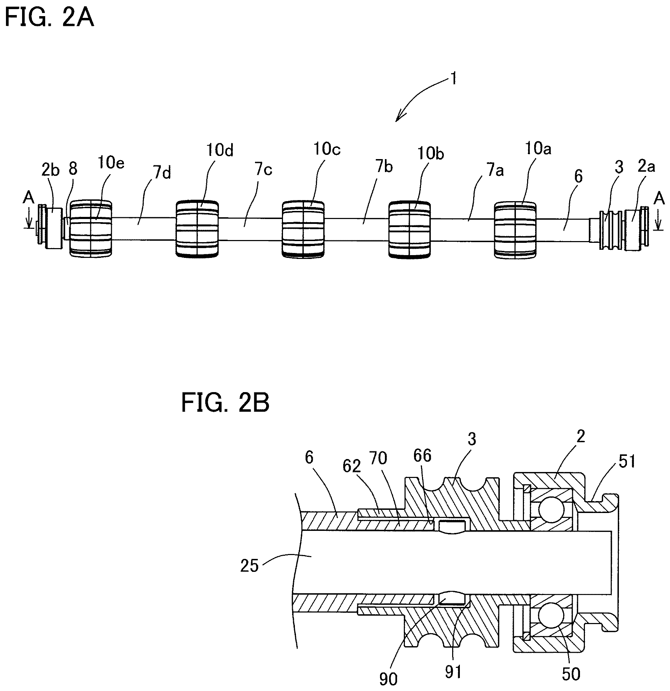

As shown in Figs. 1 and 2, the conveyance part 5 consists of a plurality of roller members 10, space retaining members 6, 7, and 8 connected in series, and a rotating core (shaft member) 25 inserted into these members. The pulley member 3 described above, the multiple roller members 10, and the space retaining members 6, 7, and 8 are engaged with each other in adjacent positions, and rotate as a single unit. Here, the multiple roller members 10, and the space retaining members 6, 7,and 8 constitute the conveyance part 5. Further, the rotating core (shaft member) 25 and the above-mentioned members and the pulley member 3 are engaged and integrated in the direction of rotation. Therefore, when the pulley member 3 rotates, the rotating core (shaft member) 25, the plurality of roller members 10, and the space retaining members 6, 7, and 8 rotate integrally.

Each component is described individually below.

### (Roller member 10)

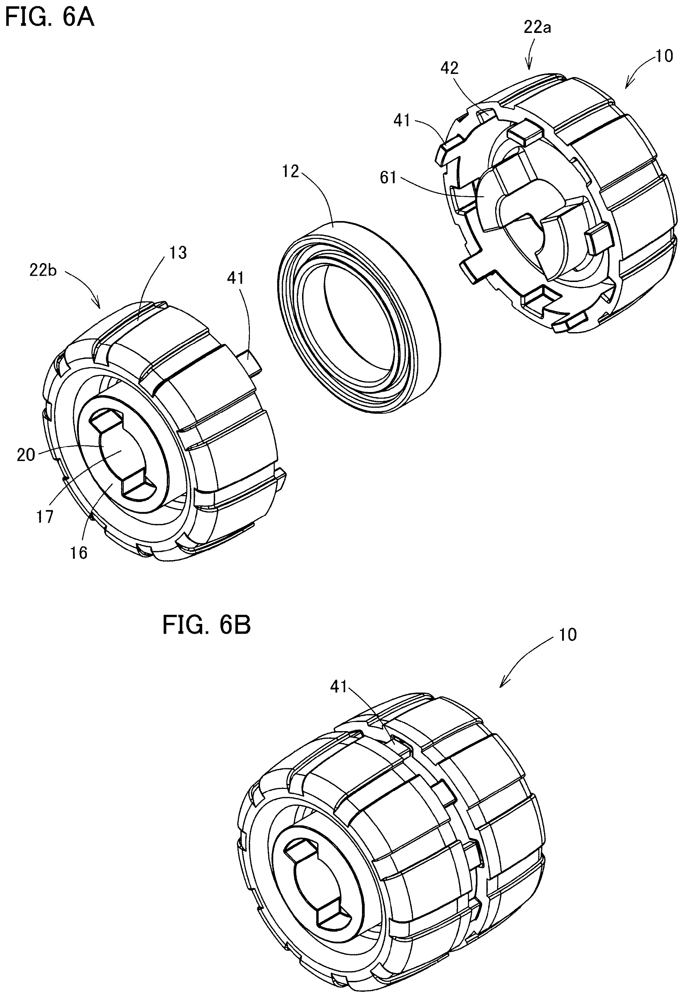

As shown in Fig. 6, the roller member 10 is constituted of a hollow outer body 11 and a reinforcing member 12.

The outer body 11 is molded from a relatively soft resin. That is, the outer body 11 is made of an elastic material such as rubber or urethane resin.

The outer body 11 is hollow inside.

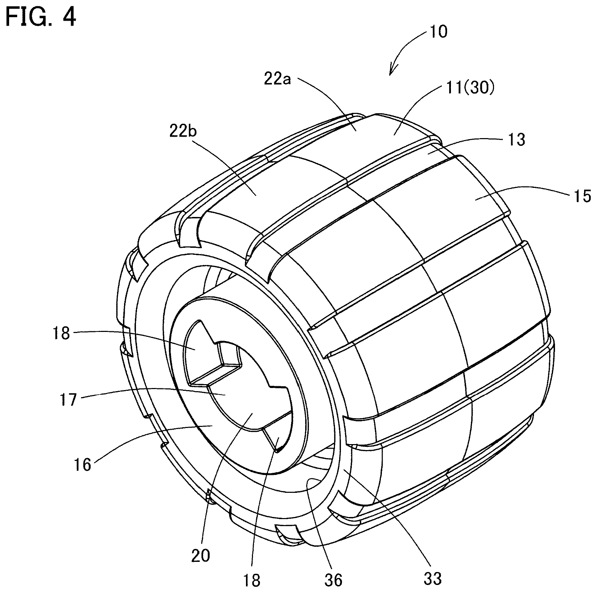

The outline of the outer body 11 is barrel-shaped, as shown in Fig. 4, having the center of the outer circumference 15 slightly swelling, and the outer diameters of the two ends slightly smaller than that of the center. However, the external shape of the outer body 11 is not restricted to a barrel shape, but may be cylindrical or may be thin like a tire.

The outer circumference 15 has a number of grooves 13. The groove 13 extend in the axial direction.

There is a boss part 16 at the center of the roller member 10. A through hole 17 is provided in the center of boss part 16. A rotating core (shaft member) 25 is inserted into the through hole 17.

An engagement groove 18 is provided near an opening of the boss part 16.

The shape of the groove of the engagement groove 18 is different in shape from a normal keyway and is fan-shaped. However, the shape of the groove of the engagement groove 18 is arbitrary and may be an ordinary square shape.

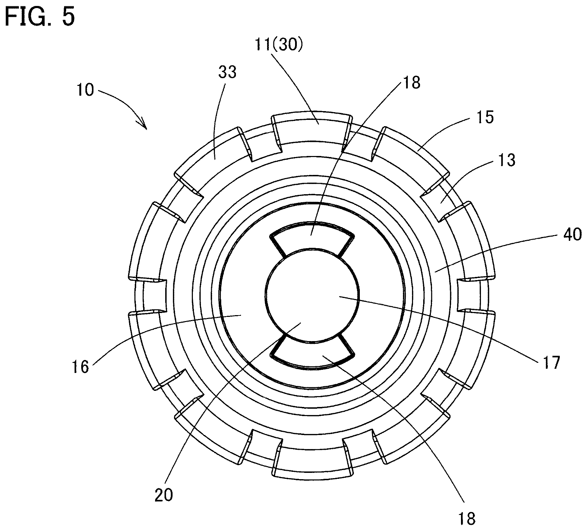

In the roller member 10 of the present embodiment, as shown in Figs. 4 and 5, two fan-shaped engagement groove 18 are provided in positions opposite each other with respect to the center hole portion 20 of the through hole 17.

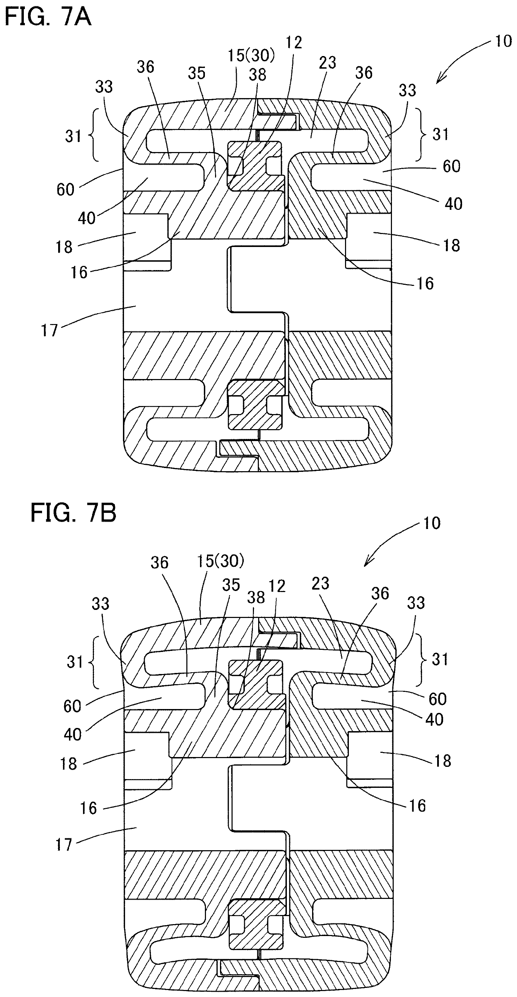

The roller member 10 employed in the present embodiment includes two roller pieces 22a and 22b joined together, as shown in Figs. 6 and 7. The roller member 10 include a cavity 23 thereinside, as shown in Fig. 7. An annular reinforcing member 12 is also built in the cavity 23. The cavity 23 is entirely covered by the perimeter wall of the outer body 11 to make the cavity almost sealed.

The outer body 11 of the roller member 10 is generally constituted of a perimeter wall and a connecting wall 31. The connecting wall 31 is constituted of a side wall 33, a joining wall (connecting part) 36, and a longitudinal wall 35.

The cross-sectional shape of the roller member 10 is shown in Fig. 7, the boss part 16 being in the center, the perimeter wall 30 surrounding the boss part 16 with the cavity 23 in between. The perimeter wall 30 is a portion constituting the outer circumference 15 of the roller member 10. The outer circumference 15 is a part that comes in contact with an object to be conveyed.

Also in the present embodiment, as previously described, there is a connecting wall 31 that connects the perimeter wall 30, which constitutes the outer circumference 15, to the boss part 16. The connecting wall 31 is constituted of a side wall 33 extending from the end of the perimeter wall 30 toward the boss part 16, a longitudinal wall 35 erected from the outer wall of the boss part 16, and a joining wall 36 connecting the side wall 33 to the longitudinal wall 35.

The outer body 11 of the roller member 10 is a series of a perimeter wall 30, a side wall 33, joining wall 36, a longitudinal wall 35, and a boss part 16, as described above, but if only the perimeter wall 30 is cut out and observed three-dimensionally, it can be said that the perimeter wall 30 is a cylinder with a large diameter
Similarly, if we cut out only the boss part 16 and observe it three-dimensionally, we can say that the boss part 16 is a small diameter cylinder.

When only the side wall 33 is cut out and observed three dimensionally, it can be said that the side wall 33 is circular with a hole in the center, like a doughnut.

If only the joining wall 36 is cut out and observed three dimensionally, it can be said that the joining wall 36 is cylindrical (hereinafter referred to as the inner cylindrical section). The outer diameter of the inner cylindrical section (joining wall 36) is smaller than the inner diameter of the perimeter wall 30. The inner diameter of the inner cylindrical section (joining wall 36) is larger than the boss part 16. When only the longitudinal wall 35 is cut out and observed three dimensionally, the longitudinal wall 35 is circular and stands radially from the boss part 16.

The perimeter wall 30 is made thicker because it is in direct contact with the object to be conveyed. In contrast, the joining wall 36 is thinner than any of the other members.

The base end of the longitudinal wall 35 on the boss part 16 side is closer to the center of the roller member 10. The base end of the boss 16 side of the longitudinal wall 35 is at least more centered than the end portion of the perimeter wall.

As described above, the joining wall 36 is shaped as the inner-cylindrical section when seen three dimensionally, and has an inner diameter larger than the boss part 16. The end portion of the boss part 16 of the longitudinal wall 35 is located at the centric side of the roller member 10. Therefore, outside of the outer body 11, there is a gap 40 between the boss part 16 and the joining wall 36. When the gap 40 is observed from the side of the roller member 10 three-dimensionally, it is an annular groove as shown in Figs. 4 and 5.

When the cross-sectional shape of the roller member 10 is observed in plan view as in Fig. 7, due to existence of a gap 40 it is observed that there is a narrowed portion. That is, the area near the boss part 16 is thinner than the outer circumference 15, and a neck section 60 is formed.

When the cross-sectional shape of the roller member 10 is observed in plan view, the joining wall 36 is parallel to the perimeter wall 30 and the boss part16 and extends horizontally from the end of the longitudinal wall 35. That is, the joining wall 36 extends in the axial direction.

Therefore, when the outer circumference 15 of the roller member 10 is pressed by an object, the joining wall 36 bends toward the gap 40, as shown in Fig. 7(b), and the outer circumference 15 moves downward as a whole. In particular, in the present embodiment, the thickness of the joining wall 36 is thinner than those of other sections, and the thickness of the neck section 60 is thinner than those of other sections, so that such sections bend easily and the outer circumference 15 moves downward as a whole to mitigate impact.

The present embodiment also has an annular reinforcing member 12 built in the cavity 23, as described above. The reinforcing member 12 is molded out of a material that is more rigid than the outer body of the roller member 10. Reinforcing member 12 is engaged with the boss part 16 three dimensionally. Observing the cross-sectional shape of the roller member 10 in plan view, a groove 38 is formed by the two joining walls 36, and the reinforcing member 12 is engaged with the groove 38.

There is a space between the reinforcing member 12 and the perimeter wall 30.

As mentioned above, the roller member 10 employed in the present embodiment consists of two roller pieces 22 joined together. The shape of the roller pieces 22 is described next.

The two roller pieces 22 have the same shape.

The outer shape of the roller pieces 22 is such that the roller member 10 described above is divided into two pieces in the center of the axial direction. Each of the roller pieces 22 has half of the perimeter wall 30, one of the two connecting walls 31, and half of the boss part 16.

The mating surfaces of the two roller pieces 22 have a engageable structure.

That is, the perimeter wall 30 has alternately allocated protrusions 41 and grooves 42. The protrusions 41 protrude axially from the end faces of the portions constituting the perimeter wall 30. The grooves 42 are on the inner surface of the portion constituting perimeter wall 30 and extends in the axial direction.

The boss part 16 has an uneven surface 61 on the mating surface.

The two roller pieces 22 are joined by engaging respective protrusions 41 of one roller piece 22 with grooves 42 of the other roller piece 22. At this time, the uneven surface 61 of the boss part 16 fit together.

The outer body 11 employed in the present embodiment is a series of perimeter wall 30, side wall 33, joining wall 36, longitudinal wall 35, and boss part 16 connected together as described above. The area enclosed by the perimeter wall 30, side wall 33, joining wall 36, longitudinal wall 35 and boss part 16 is hollow and has no support (cavity 23). That is, the perimeter wall 30 is supported only by the side walls 33 that connect to both end portions of the perimeter wall 30, and there is no support for the middle portion of the perimeter wall 30.

### (Holding member 2)

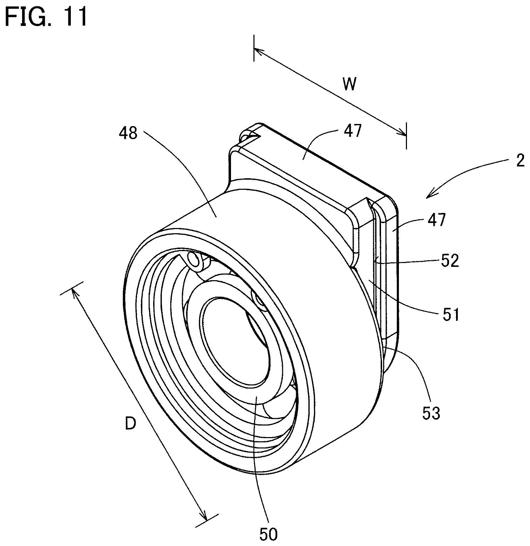

A holding member 2, as shown in Fig. 11, is composed of a support portion 47 and a bearing portion 48.

The support portion 47 is a plate-like member with an arc-shaped lower end. The bearing portion 48 has a short and cylindrical shape, containing a bearing 50 inside.

The holding member 2 is constituted by providing a bearing portion 48 onto one surface of the support portion 47 integrally. The diameter D of the bearing portion 48 is larger than the width W of the support portion 47. Therefore, the bearing portion 48 protrudes from the support portion 47 in the width direction.

Grooves 51 are provided on the side faces of the holding member 2. In the present embodiment, there is a step 52 on the front side of the support portion 47, and a grooves 51 are constituted between the step 52 and the rear wall 53 of the bearing portion 48.

The location of the grooves 51 is not limited to the present embodiment and may be located on the side face of the support portion 47.

### (Pulley member 3)

A pulley member 3 is a double row of pulleys. One pulley functions as the passive side engaging member that receives power transmission indirectly from the drive motor (drive member) that is not shown in the figure. The other pulley functions as the drive-side engaging member that transmits power to the conveying roller 1.

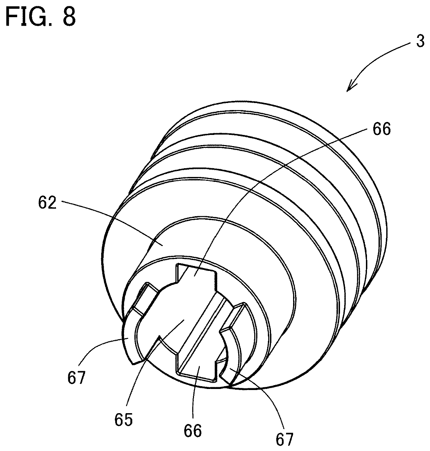

The pulley member 3 has a boss part 62 as shown in Fig. 8, and a through hole 65 through which the rotating core (shaft member) 25 is inserted is provided in the boss part 62. There are two grooves 66 in the through hole 65. The grooves 66 are bottomed and end at the back wall 91 inside the boss part. Two engaging protrusions 67 are provided on the end face of boss part 62.

A sprocket or a gear may be used in place of the pulley member 3. When a sprocket is employed, power is transmitted by a chain.

### (End portion side space retaining member 6)

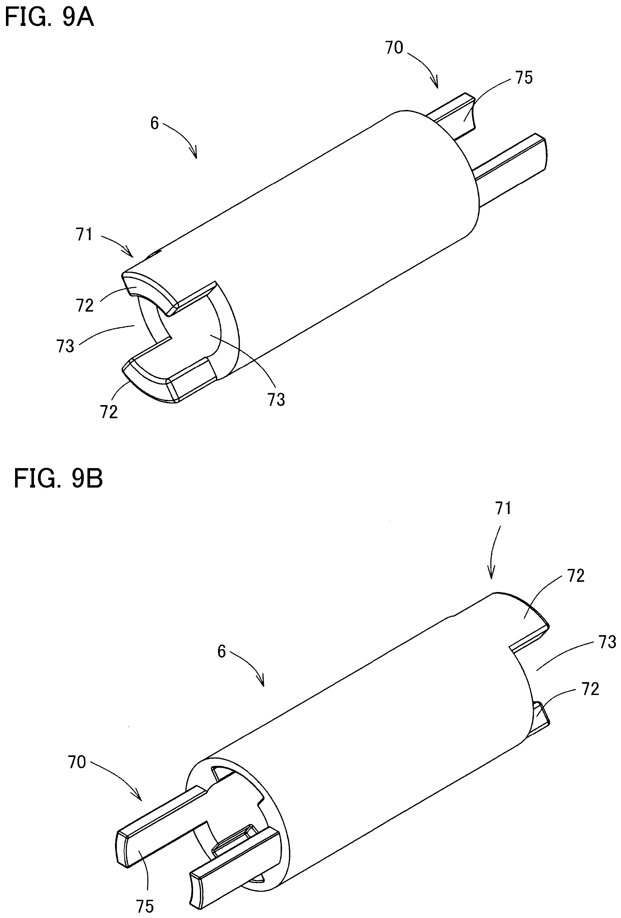

An end portion side space retaining member 6 is a cylindrical member, and is provided with engagement portions 70 and 71 at both ends as shown in Figs. 9A and 9B.

The engagement portion 70 at one end (at the pulley member 3 side) has two protrusions 75. The two protrusions 75 are longer than the protrusions of the other engagement portion 71.

The engagement portion 71 at the other end (at the roller member 10 side) has two engagement protrusions 72 and two engagement recesses 73 formed alternately.

The end portion side space retaining member 6 is one of the positioning members.

### (Intermediate space retaining member 7)

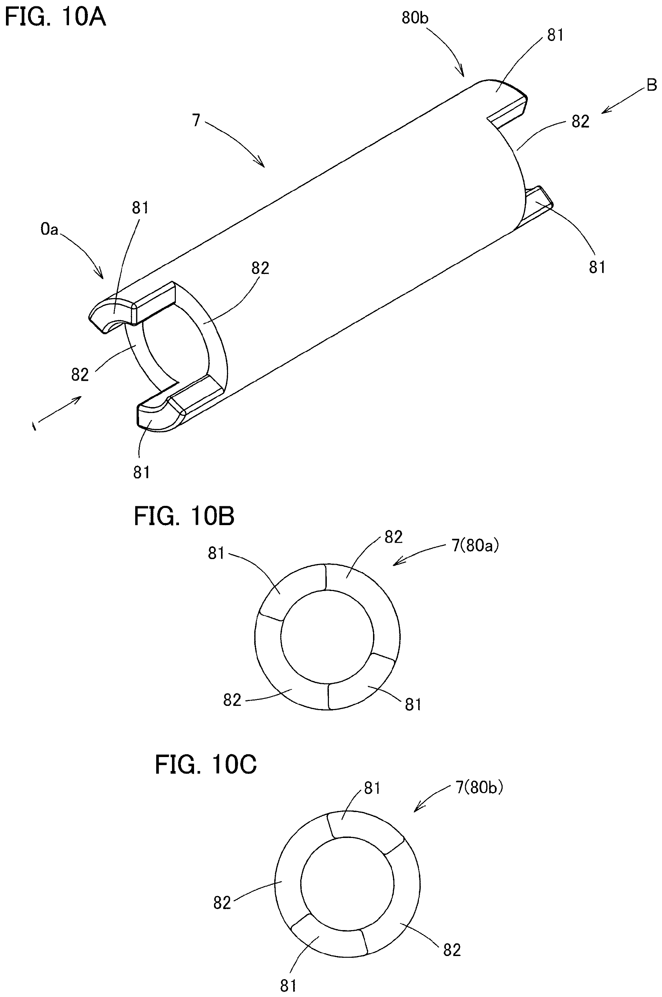

An intermediate space retaining member 7 is a cylindrical member with engagement portions 80 at both ends as shown in Figs. 10 A 10B, and 10C.

Both of the engagement portions 80a and 80b at both ends have two protrusions 81 and two recesses 82 formed alternately. The engagement portions 80a and 80b of both ends have shifted phase as shown in Figs. 10A 10B, and 10C.

### (Tip space retaining member 8)

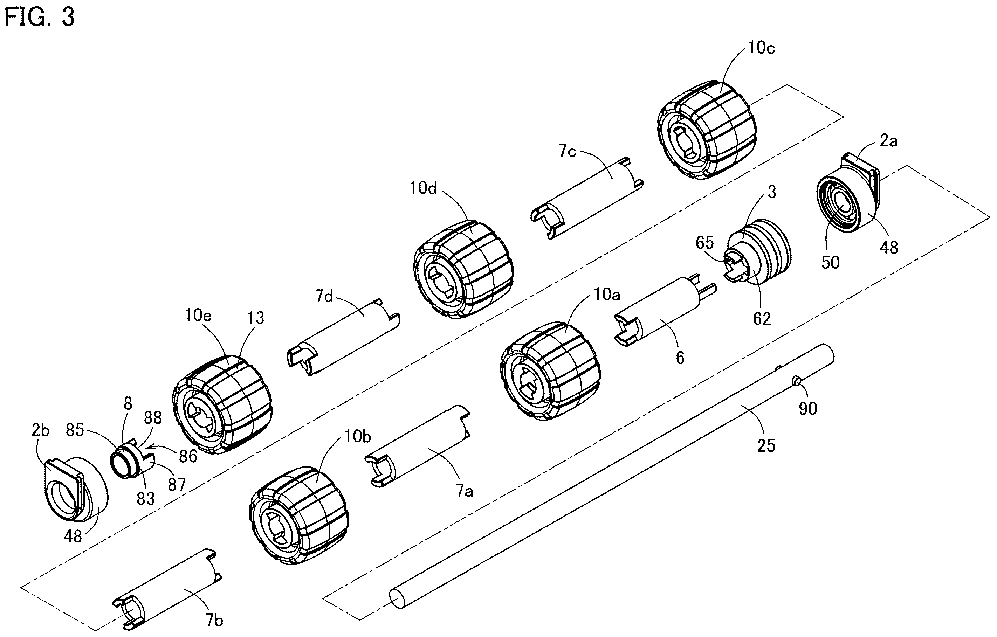

A tip space retaining member 8 is a cylindrical member having a large diameter portion 83 and a small diameter part 85, as shown in Fig. 3. An engagement portion 86 is provided on the end face of the large diameter portion 83. The engagement portion 86 has two protrusions 87 and two recesses 88 formed alternately.

The tip space retaining member 8 is one of the positioning members.

### (Rotating core 25)

A rotating core (shaft member) 25 is a rod with a circular cross-sectional shape. A pin 90 is attached to one end of the rotating core 25. A part of the pin 90 protrudes from the circumference of the rotating core 25.

Next, the assembly structure of the conveying roller (rotary member for conveyance) 1 is described.

The conveying roller 1 of the present embodiment has a rotating core 25 inserted into the boss part 62 of the pulley member 3, the cylindrical portion of the end portion side space retaining member 6, the boss part 16 of the roller member 10, the cylindrical portion of the intermediate space retaining member 7, and the cylindrical portion of the tip space retaining member 8. Further, both ends of the rotating core 25 are inserted into the bearing 50 of the holding member 2.

That is, in the present embodiment, the first holding member 2a, pulley member 3, end space retaining member 6, first roller member 10a, first intermediate space retaining member 7a, second roller member 10b, second intermediate space retaining member 7b, third roller member 10c, third intermediate space retaining member 7c, fourth roller member 10d, fourth intermediate space retaining member 7d, fifth roller member10e, tip space retaining member 8 and second holding member 2b are, in this order, attached to the rotating core 25.

In the present embodiment, both the first holding member 2a and the second holding member 2b are mounted with the bearing portion 48 in an inward position.

The engagement portions of each member engage with each other, and the pulley member 3, end space retaining member 6, first roller member 10a, first intermediate space retaining member 7a, second roller member 10b, second intermediate space retaining member 7b, third roller member 10c, third intermediate space retaining member 7c, fourth roller member 10d, fourth intermediate space retaining member 7d, fifth roller member 10e, and tip space retaining member 8 are integrally coupled in the direction of rotation.

Further, each of the above members is arranged with substantially no gaps between them. Therefore, each member has no axial freedom.

In the present embodiment, the pin (engagement portion) 90 of the rotating core 25 is engaged with the groove 66 of the boss part 62 of the pulley member 3, and the series of members described above and the rotating core 25 are integrally- connected in the rotational direction.

Furthermore, the pin (engagement portion) 90 of the rotating core 25 is sandwiched between the back wall 91 of the groove of the pulley member 3 and the protrusion of the engagement portion 70 of the end portion side space retaining member 6 to restrict axial movement, as shown in Fig. 2B. Therefore, the rotating core 25 does not fall out.

In the conveying roller 1 of the present embodiment the adjacent roller members 10 are engaged with each other by the Intermediate space retaining member 7. Hereupon, in the intermediate space retaining member 7, the engagement portions 80a and 80b of both ends show shifted phases, as in Fig 10.

Therefore, each of the rotating cores (shaft members) 25 is inserted into the roller member 10 in a different posture where the groove (uneven surface) 13, which is provided on the surface of the roller member 10, has a different phase. As a result, it is less likely to cause impact to the objects being conveyed.

### (Conveyor device)

The conveying roller 1 of the present embodiment is built in a frame 101 to form a conveyor device 100, as shown in Figs. 12 to 14.

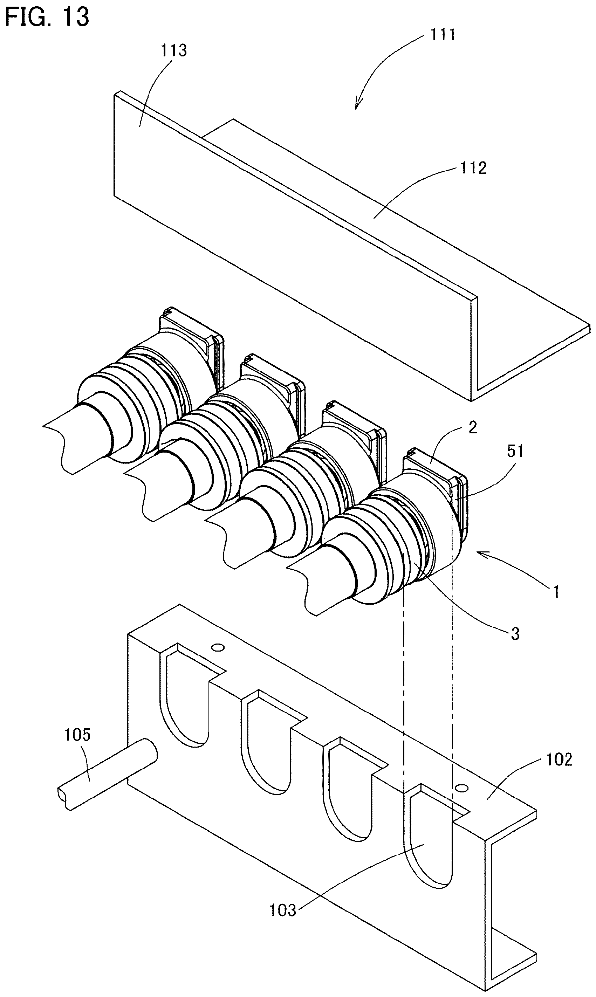

The frame 101 has opposing frame pieces 102 each having a "U"-shaped notches 103, as shown in Figs. 12 and 13. The opposing frame pieces 102 are joined by bar shaped stays 105, as shown in Fig. 13. Although one stay 105 on one end is illustrated in Fig. 13, the frame pieces 102 are actually joined by stays 105 at both ends to the respective frame pieces 102 in the longitudinal direction. The conveying roller 1 is inserted into the notch 103 of the frame piece 102 and is positioned and fixed in the length direction of the conveying roller 1 by the stays 105, so that the roller members 10 of the conveying roller 1 are not disassembled into the outer bodies 11 and reinforcing members12 as shown in Fig. 6A.

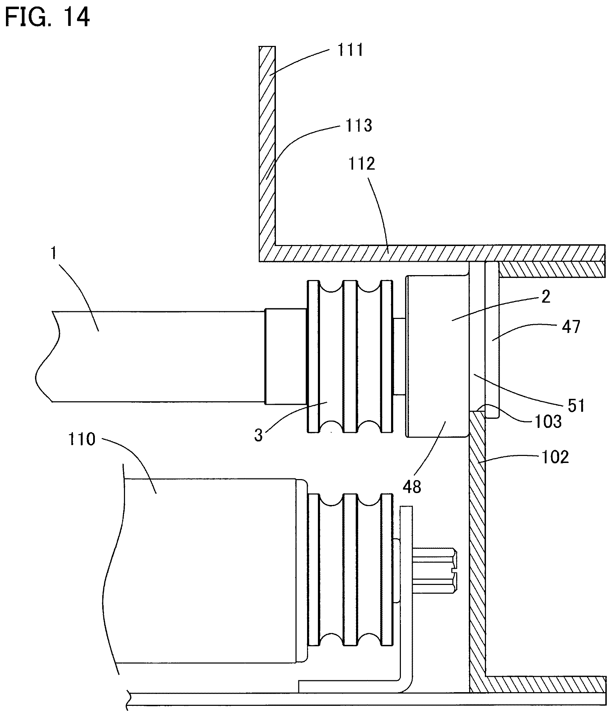

The conveyor device 100 of the present embodiment has a number of conveying rollers 1 which are attached by engaging the notches 103 of the frame piece 102 with the grooves 51 of the holding members 2 of each conveying roller 1. A transmission belt, not shown in any Figs., is suspended onto the pulley members 3 of the adjacent conveying rollers 1.
As shown in Fig. 14, an anti-detach member 111 is attached onto the top of frame piece 102.
Although Fig. 14 shows one frame piece 102, both the anti-detach members 111 are attached onto respective frame pieces 102.

The anti-detach member 111 is "L" shaped in cross section, as shown in Fig. 13, and has an installation portion 112 and a wall-shaped portion 113.

The installation portion 112 is placed on the top of the frame piece 102 and fixed onto the frame piece 102 with screws not shown.

The wall-shaped portion 113 is attached in an overhanging posture from the frame piece 102 to the conveying surface side, as shown in Fig. 14, and part of the installation portion 112 covers the pulley members 3 of the conveying roller 1.

Therefore, the anti-detach member 111 also functions as a cover for the pulley members 3, preventing accidents in which the operator's fingers get caught in the belt.

The wall-shaped portion 113 of the anti-detach member 111 is provided on both frame pieces 102 and extends out toward the conveying surface. The wall-shaped portion 113 of the anti-detach member 111 serves as a guide for the material to be conveyed.

In the conveyor device 100 of the present embodiment, the pulley member 3 of a conveying roller 1 is engaged with a drive source such as a geared motor 110, which is provided at the bottom as shown in Fig. 14, through a belt (not shown). Thus, the conveying roller 1 is driven by the drive source. Furthermore, the transmission belt, not shown in any Figs., transfers rotational power to the adjacent conveying rollers1 one after the other.

When an object is placed on the conveyor device 100 of the present embodiment, it moves as the conveying roller 1 rotates.

When the conveying rollers 1 receive an impact, such as when a conveyed object is fed into the conveying rollers, the roller members 10 deform to cushion the impact.

That is, since the interior of the roller member 10 is hollow, when the outer circumference 15 receives an impact, the outer circumference 15 itself deforms to cushion the impact.

In the case of a large impact, the joining wall 36 bends toward the gap 40, as shown in Fig. 7(b), and the outer circumference 15 moves elastically downward in a full-body manner to mitigate the impact.

However, the roller member 10 of the present embodiment has a reinforcing member 12 inside, thereby the reinforcing member 12 being too rigid to be easily deformed.

Therefore, the deformation capability of the roller member 10 is limited to the range of the gap between the reinforcing member 12 and the inner surface of the outer circumference 15. Consequently, even when subjected to strong force from the object, the outer circumference 15 is not excessively deformed and has little adverse effect on conveyance.

In the conveyor device 100 of the present embodiment, the conveying roller 1 has a large diameter portion where the roller member 10 is present and a small diameter portion composed of the intermediate space retaining member 7. The large diameter portion of a specific conveying roller 1 is in position corresponding to the small diameter portion of the adjacent conveying roller 1, and the small diameter portion of a specific conveying roller 1 is in position corresponding to the large diameter portion of the adjacent conveying roller 1. Therefore, the distance between the axes of the adjacent conveying roller 1 is shorter than the diameter of the large diameter portion.

With this structure, the conveyor device 100 of the present embodiment has the conveying rollers 1 densely arranged, providing many opportunities for contact between the conveyed object and the conveying rollers 1, preventing the conveyed object from rattling. Therefore, the impact onto the object is small.

The conveying roller 1 employed in the conveyor device 100 of the present embodiment has holding members 2 at both ends and is held in bearings 50 of the holding members 2.

In the present embodiment, the holding member 2 is divided into a support portion 47 and a bearing portion 48. Primarily, the support portion 47 serves to fix the conveying roller 1 to the frame piece 102, and the bearing portion 48 serves to rotatably support the conveying roller 1.

The holding member 2 of the present embodiment is divided into the support portion 47 and the bearing portion 48. Since the support portion 47 has the function of fixing the conveying roller 1 to the frame piece 102, the notch 103 that should be formed in the frame piece 102 can be made smaller.

This allows for a higher density installation of conveying rollers 1 at the frame 101. That is, the bearing 50 must be a certain size or larger because of the need to hold the load of the object. The housing that holds the bearing 50 cannot be less than a certain size accordingly.

The present embodiment solves this problem. Since the holding member 2 are divided into the support portion 47, which has the function of fixing the conveying roller 1 to the frame piece 102, and the bearing portion 48, which holds the bearing 50, the support portion 47 can be made smaller and the notch 103 that should be formed in the frame piece 102 can be made smaller. This allows for a higher density installation of conveying roller 1 at the frame 101.

In the embodiment described above, the bearing portion 48 is attached to the frame piece 102 in an attitude in which it protrudes toward the conveying surface. Conversely, however, it may be installed so that the bearing portion 48 is placed to be outside.

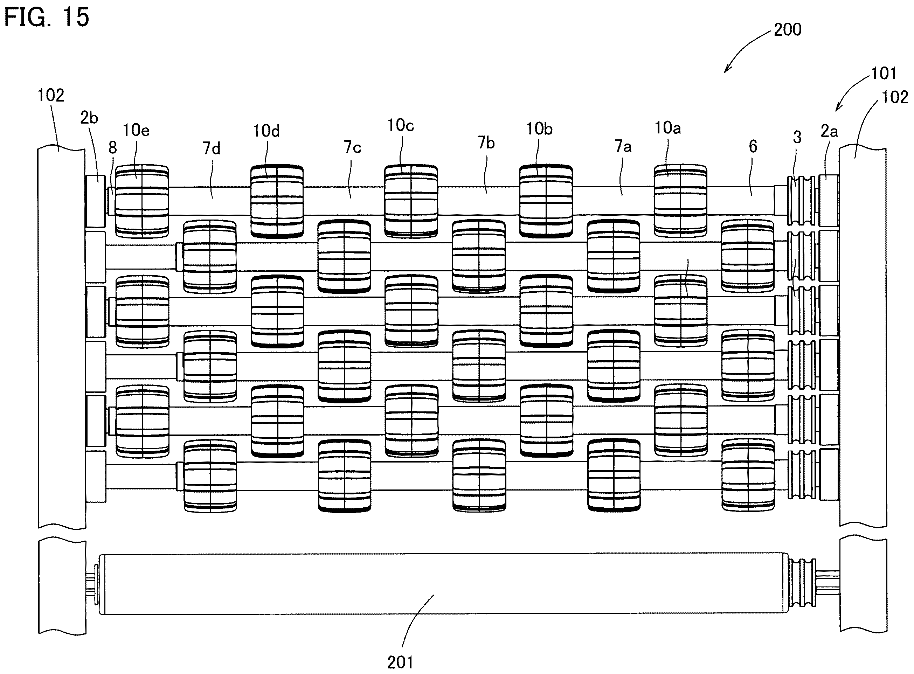

In the conveyor device 100 described above, a drive source such as a geared motor 110 is installed under the conveying surface. However, as shown in the conveyor device 200 of Fig. 15, a motor-integrated roller 201 with a built-in motor may be installed in the same plane as the conveying rollers 1 so that a power transmission could be performed with a belt (not shown) suspended between the motor-integrated roller 201 and the conveying rollers 1.

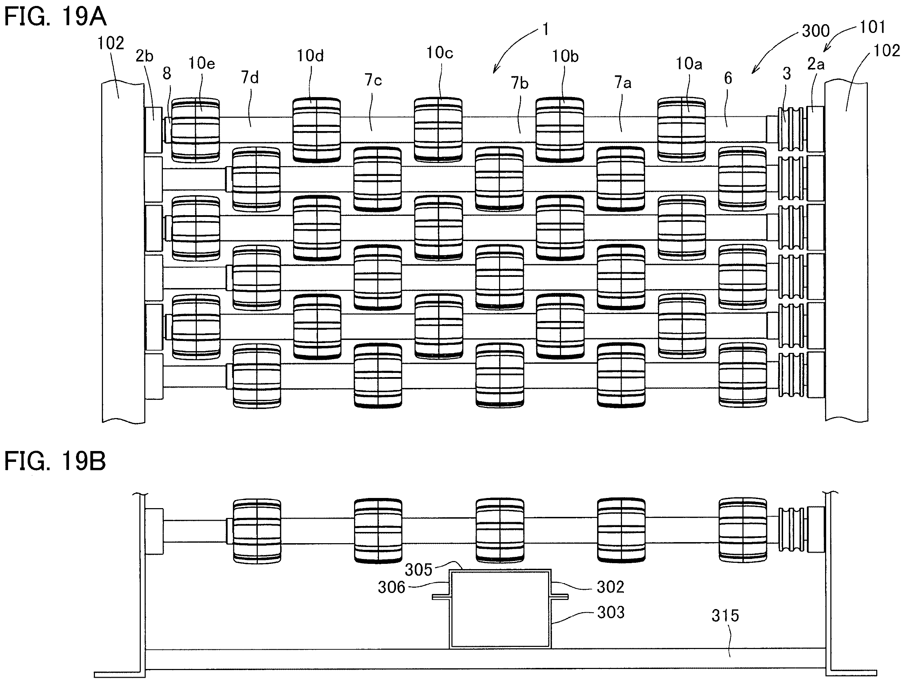

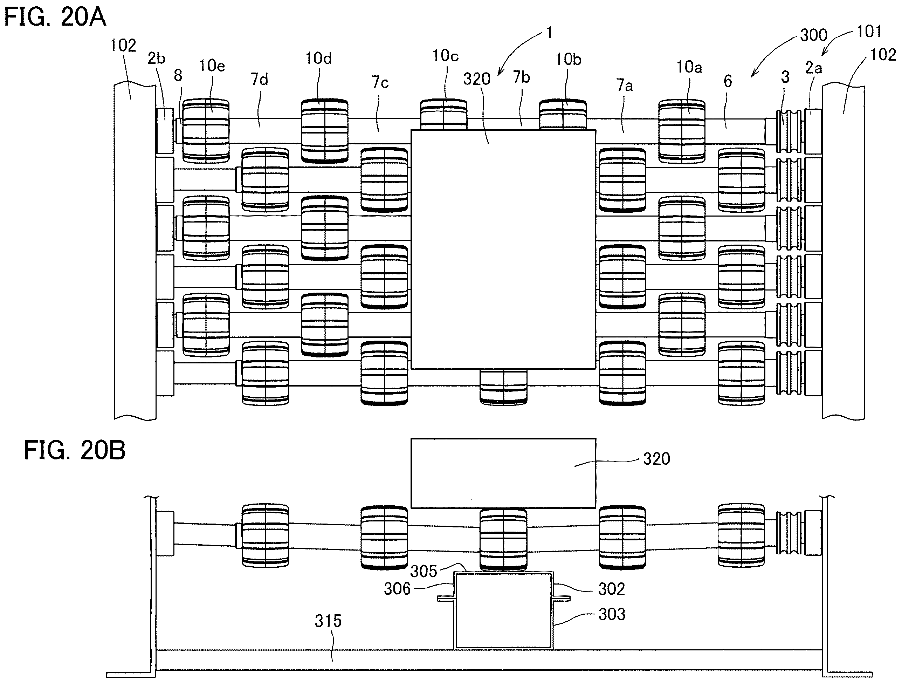

Further, like conveyor device 300 shown in Figs. 19 and 20, a support member 302 may be provided under conveying rollers 1 to prevent conveying rollers 1 from being plastically deformed.

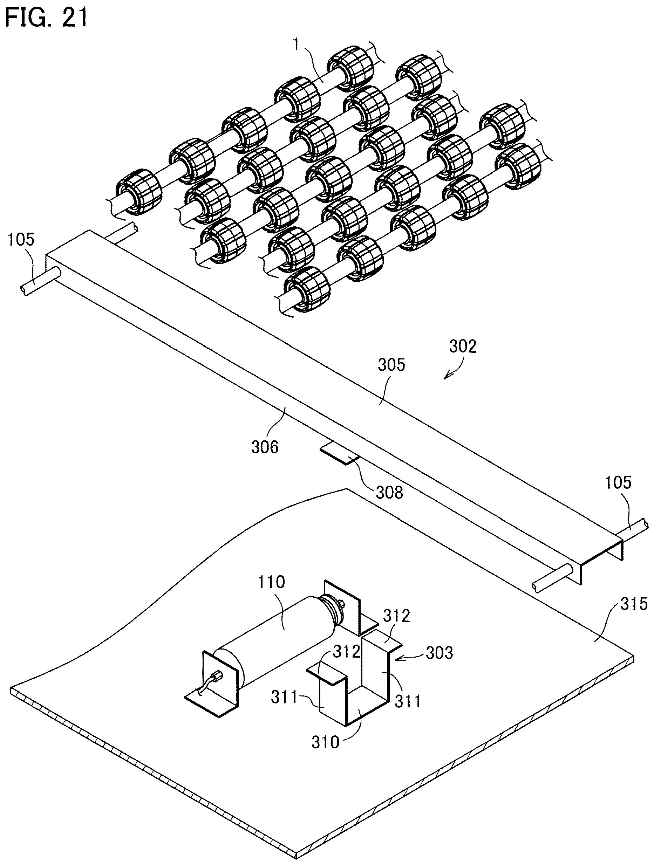

As shown in Figure 21, the support member 302 is supported at both ends by the stays 105 of the frame 101 and at the middle by a pedestal member 303.

The support member 302 is "concave" in most cross sections and has a top plate 305 and left and right side walls 306. The total length of the support member 302 is comparable to the length of the conveyor device 300 in the conveying direction.

A joining piece 308 is provided in the center of each side wall 306.

The pedestal member 303 has a bottom wall 310 and a left and right side walls 311, with the side walls 311 opening outward to form a joint 312.

The pedestal member 303 is fixed to the bottom plate 315 of the conveyor device 300.

The support member 302 is supported at both ends by the stays 105 of the frame 101 and at the middle by the pedestal member 303, as described above.

That is, the joining piece 308 provided in the middle of the support member 302 is aligned with the joint 312 of the pedestal member 303, and is fixed to the pedestal member 303 by inserting screws or other means not shown in the figure between them.

As shown in Figs. 19 and 20, the support member 302 is located in the middle of conveying roller 1 and under the conveying rollers 1.

When the conveyor device 300 is unloaded, as shown in Fig. 19, the support member 302 is away from the conveying roller 1, and the two are in a non-contact situation. Therefore, if the object placed on the conveyor device 300 is of the proper weight, it does not come in contact with the support member 302 when the conveying roller 1 rotates. Accordingly, the support member 302 does not obstruct the rotation of conveying rollers

On the other hand, as shown in Figure 20, when a heavy object 320 is placed on the conveyor device 300 and the conveying rollers 1 bend, the lower parts of the conveying rollers 1 come in contact with the top plate 305 of the support member 302, and part of the weight of the object 320 is taken care of by the support member 302. Therefore, even if a conveyor device 300 is loaded with an excessively heavy object 320, the conveying rollers 1 are prevented from excessively bending. As a result, the conveying rollers 1 are prevented from remaining permanent distortion.

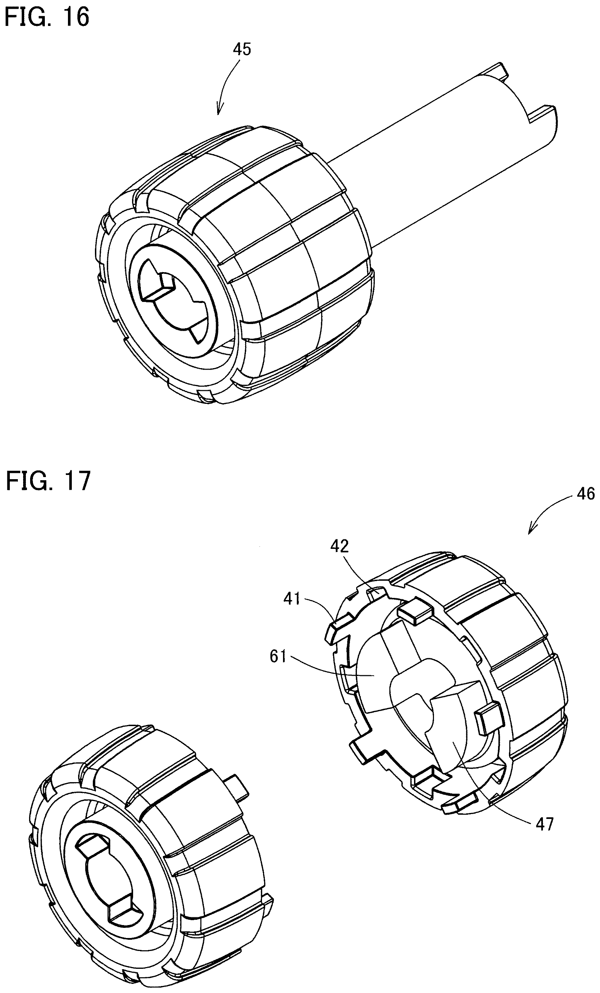

In the embodiment described above, the space between the roller members 10 was retained by interposing a space retaining member 7 between the roller members 10. However, the roller member 45 and the space retainer member may be integrated, as shown in Fig. 16.

In the embodiment described above, the reinforcing member 12 is built in the outer body 11, but the reinforcing member 12 is not essential.

Furthermore, the roller member 10 of the present embodiment regulates the deformation capability of the outer body 11 by means of the reinforcing member 12. Therefore, the deformation capability of the outer body 11 can also be set by changing the size of the reinforcing member 12.

In particular, the roller member 10 of the present embodiment is composed of two roller pieces 22 joined together. Therefore, the deformation capability of the outer body 11 can be changed by splitting the roller member 10 into two roller pieces 22 and replacing the reinforcing member 12 that is placed inside.

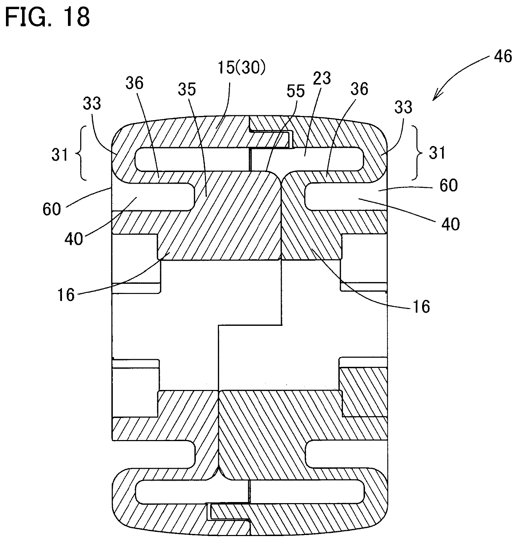

It is also recommended not to use the roller member 10 but to use the roller member that simply does not have the reinforcing member 12 but still have the groove 38. However, it is also recommended to use a roller member 46 that does not have the groove 38 shown in Figs. 17 and 18.

The roller member 46 shown in Figs. 17 and 18 has a thicker central portion of boss part 16 and a padding portion 55 of boss part 16 at a location corresponding to groove 38.

In the embodiment described above, a circular rotating core 25 was used and a pin 90 was engaged with one of the members to rotate the rotating core 25 and the roller member 10, etc. integrally. However, for example, a square core may be employed as the rotating core, and the square core may be directly engaged with the roller member 10, etc.

The above described roller members 10 and 45 are a rotary members for conveyance that come in contact with an object to move the object and that have a shaft member and a roller member. The roller member has an outer body 11 and a reinforcing member 12. The outer body 11 has a hollow structure, and the reinforcing member 12 is provided in the cavity of the outer body 11.

The above described roller members 10, 45, and 46 are rotary members for conveyance that come in contact with an object to move the object and that have a shaft member and a roller member. The roller member has a cavity 23 surrounded by a perimeter wall 30 that comes in contact with the object and a joining wall (connecting part) 36 that connects the sides of the perimeter wall 30 to a center portion of the boss part 16.

The holding member 2 described above has a support portion 47 that is fixed to the frame and a bearing portion 48 including the bearing 50, and the bearing 50 is provided on one face of the support portion 47, and the bearing 50 protrudes from the support portion 47.

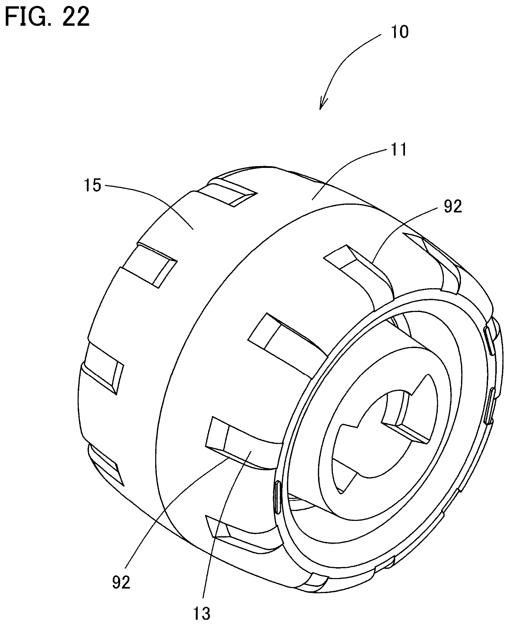

Another example of a roller member 10 is shown in Fig. 22, where groove 13 extends in the axial direction, but is present only at the outer circumference 15 of the roller member 10, at most 1/4 length of the outer circumference from both the ends of the outer circumference in the axial direction.

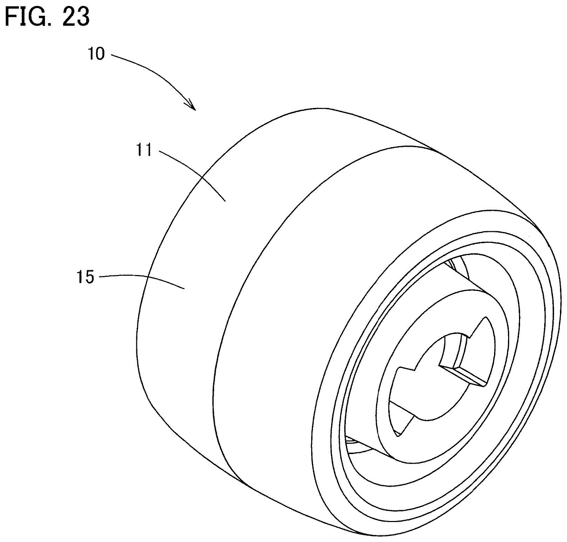

A further example of a roller member 10 is a roller member with no grooves at all on the outer circumference 15 of the roller member, as shown in Figure 23.

If the groove 13 is provided at 1/4 length of the outer circumference from the end of the outer circumference in the axial direction, the area of contact between the edge 92 of the groove 13 and the object is reduced, and the sound is suppressed. If the grooves 13 are not provided, contact between the edges of the grooves and the object does not occur, thus eliminating any sound caused by contact between the edges of the grooves and the object.

Furthermore, by providing the aforementioned grooves 13 only at a position approximately 1/4 length of the outer circumference from the end of the outer circumference in the axial direction, the roller member can maintain flexibility due to the presence of grooves 13 at the axial end of the outer peripheral portion. This has the effect of suppressing sound generation and preventing damage to the object compared to when no groove is provided.

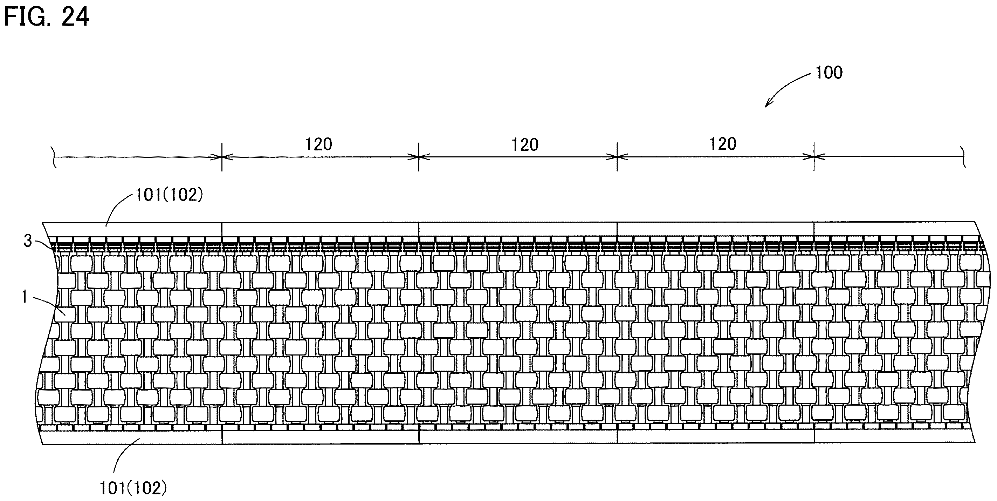

Next, the characteristic configuration of the conveyor device 100 is explained with reference to Figs. 24 to 27. The structure of the conveyor device 100 described below itself is not limited to the use of the roller member 10 illustrated in Fig. 1, etc.

The whole configuration of conveyor device 100 of the present embodiment is characterized in that short conveyor devices 120 are connected in series, as shown in Figure 24. In each short conveyor device 120, a drive source such as a geared motor and a pulley member 3 of one conveying roller (rotary member for conveyance) 1 are engaged through a belt (not shown). Therefore, the one conveying roller 1 is driven by the drive source. Then, the transmission belt, not shown in the figure, transfers rotational power to the adjacent conveying rollers 1 one after another.

Each of the short conveyor devices 120 is driven and stopped independently.

The conveyor device 100 of the present embodiment is constituted of a number of short conveyor devices 120 connected in series, forming a series of conveying passages.

When an object is placed on the conveyor device 100 of the present embodiment, the object moves with rotation of the conveying roller 1.

Each short conveyor device 120 is composed of a number of conveying rollers (rotary member for conveyance) 1 arranged in parallel on a frame 101. The frame 101 includes opposing frame pieces 102.

The conveying roller (rotary member for conveyance) 1 shows a shape in which a large diameter portion 121 and a small diameter portion 122 are alternately provided onto the central axis. The large diameter portion 121 is hollow. The conveying roller (rotary member for conveyance) 1 has an internal cavity that allows a roller member to easily deform when an object collides with the conveying roller 1, thereby softening the impact of the collision. As a result, even when the object collides with the conveying roller 1, it is unlikely to generate sound. It is also less likely to damage a conveyance part.

In each short conveyor device 120, both ends of the conveying roller (rotary member for conveyance) 1 are rotatably supported on opposing frame pieces 102.

In the short conveyor device 120, the conveying rollers 1 are densely arranged, and a first and a second conveying rollers are arranged adjacently. Upon here, the large diameter portion 121 of the first conveying roller 1 is located at a position corresponding to the small diameter portion 122 of the second conveying roller 1.

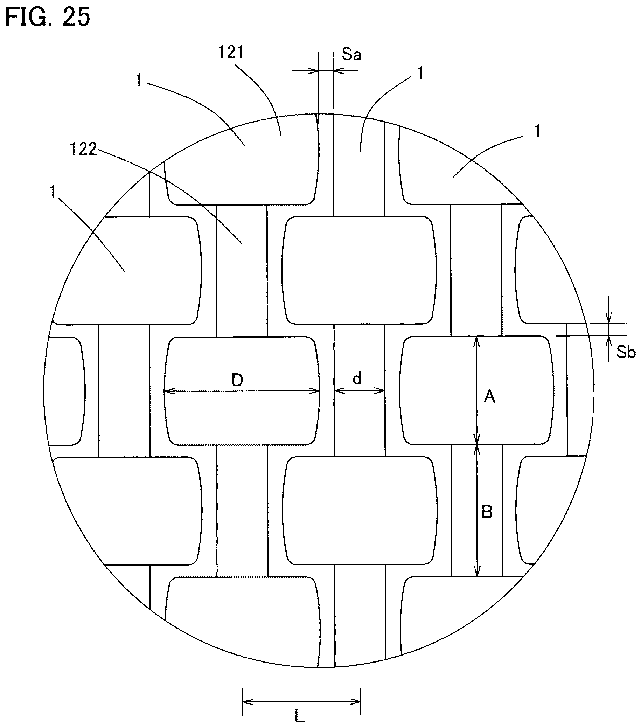

That is, in the short conveyor device 120, the distance L between the shafts of adjacent conveying rollers 1 is short, as shown in Fig. 25. As shown in Fig. 25, if the diameter of the large diameter portion 121 is D, the distance between the shafts L is smaller than the diameter D of the large diameter portion 121.

If the diameter of the small diameter portion 122 is d, then (D + d)/2 is slightly smaller than the interaxial distance L.

That is, (D + d)/2 is 70% or more of the interaxial distance L, and preferably 80% or more.

Therefore, the gap Sa between the small diameter portion 122 and the large diameter portion 121 of the adjacent conveying rollers 1 is extremely small, the gap Sa being equal to or less than 15 percent of the diameter D of the large diameter portion 121, more preferably equal to or less than 10 percent of that.

If the length of the large diameter portion 121 is A and the length of the small diameter portion 122 is B, the length of the large diameter portion 121, A, is slightly smaller than the length of the small diameter portion 122, B.

That is, the length A of the large diameter portion 121 is equal to or more than 70 percent of the length of the small diameter portion 122, and preferably equal to or more than 80 percent.

Therefore, the axial gap Sb between the large diameter portions 121 of the adjacent conveying roller 1 is extremely small.

Therefore, the conveyor device 100 has a few gaps overall and is in a dense state.

Although not limiting, the diameter D of the large diameter portion 121 is from 25 mm to 80 mm, preferably from 30 mm to 60 mm. The gap Sa between the small and large diameter portions 122 and 121 of the adjacent conveying roller 1 is 10 mm or less, preferably 3 mm or less.

In this form of conveyor device 100, since the conveying rollers 1 are densely arranged, there are many chances for an object to be in contact with the conveying rollers 1. Accordingly, the object will not rattle easily. Since the conveyor device 100 of the present embodiment has a small gap, it is difficult for the object to fall down between the conveying rollers 1 even when the object with small external shape is conveyed.

In addition, a trough between adjacent conveying rollers 1 of the present conveyor device 100 are discontinuous in the width direction of the conveyor device 100. Therefore, even when the object with small outer shape is conveyed, the object is unlikely to fall down between the conveying rollers 1.

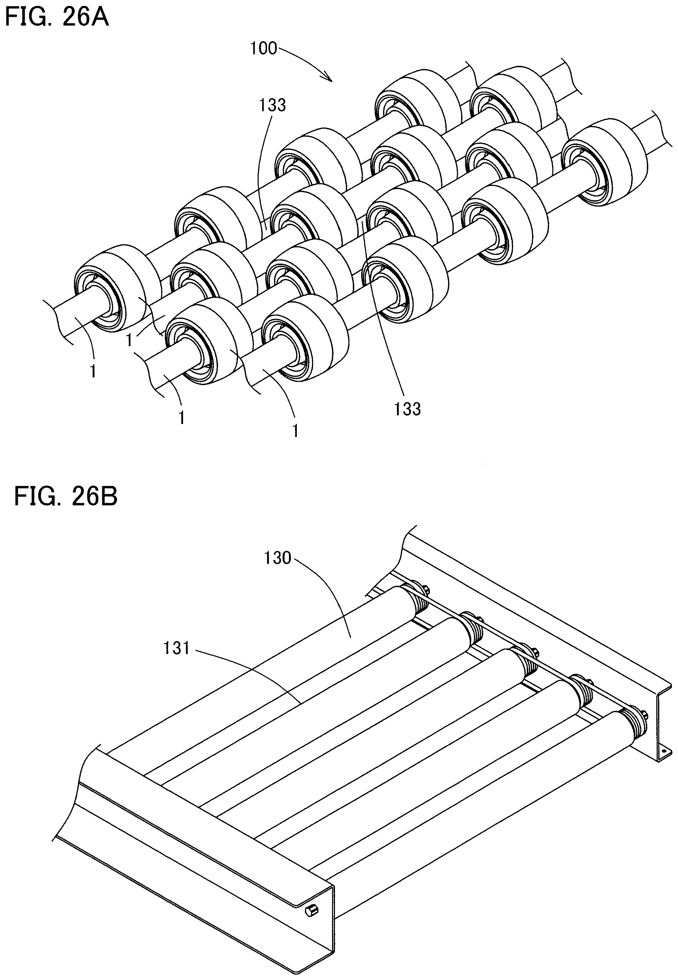

That is, in a conventional roller conveyor device, the troughs 131 of the conveying roller 130 are continuous in the width direction of the roller conveyor system, as shown in Fig. 26B. Therefore, in conventional roller conveyor device, an object tends to fall between the conveying rollers. Even if the object is long in the width direction of the roller conveyor device, if the length of the object in the travel direction of the roller conveyor device is short, it will become lodged in the trough 131 of the conveying roller 130 and become unable to get out.

In contrast, the conveyor device 100 of the present embodiment, the troughs 133 of adjacent conveying rollers 1 are staggered, and the troughs 133 of adjacent conveying roller 1 are discontinuous in the width direction of conveyor device 100. Therefore, even though the conveyor device 100 is short in the width direction of the conveyor device 100, it is supported by a plurality of large diameter portions 121. If the object is long in the width direction, it will naturally be supported by multiple large diameter portions 121. Thus, in either case, the object does not fall into the troughs. Therefore, according to the conveyor device 100 of the present embodiment, even objects with a large external shape can be conveyed smoothly.

As mentioned above, the conveyor device 100 of the present embodiment is composed of a number of short conveyor devices 120 connected in series. In the conveyor device 100 of the present embodiment, a connection portion where the first and second short conveyor devices 120 are connected also has a large diameter portion 121 of one conveying roller 1 located at a position corresponding to a small diameter portion 122 of the adjacently located conveying roller 1. That is, at the connecting part where the first and the second short conveyor devices are adjacently arranged, a large diameter portion 121 of the conveying roller 1 of the end portion of the first short conveyor device 120 is in the position of a small diameter portion 122 of the conveying roller 1 of the end portion of the second short conveyor device 120.

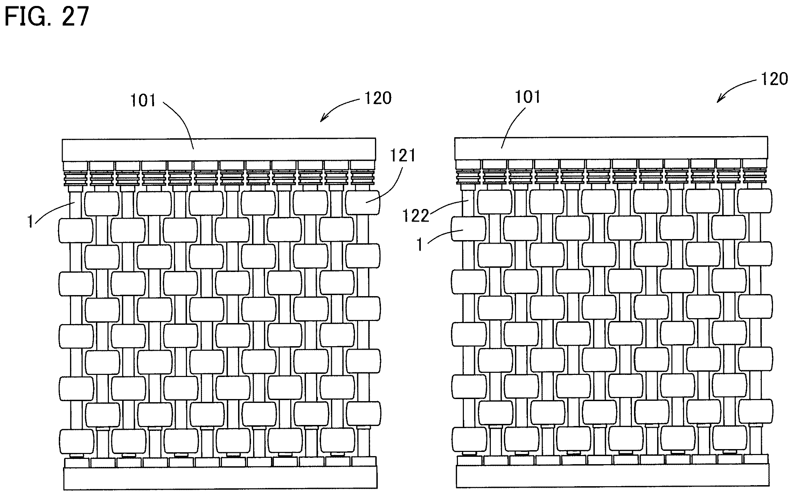

Turning to the end portion of the short conveyor device 120, as shown in Figure 27, the conveying roller 1 is supported on the end portion of the frame 101, and a part of the large diameter portion 121 extends outside the frame 101. Therefore, when the short conveyor device 120 are connected in series, the large diameter portion 121 of the conveying roller 1 at the end portion of the first short conveyor devices 120 is located at a position corresponding to the small diameter portion 122 of the conveying roller 1 provided at the end portion of the second short conveyor device 120.

Therefore, there are no gaps between the short conveyor devices 120.

The conveyor device 100 may be used as an inclined conveyor device or installed horizontally.

The color of the outer body 11 of the roller member 10 is usually black, but the color of the roller member 10 is not limited. For example, it can be a blue color for food conveying equipment and a white color for crane equipment.

The outer body 11 is made of an elastic material such as rubber or urethane resin, preferably thermosetting polyurethane. The material of the outer body 11 is not limited to the above. Ethylene-propylene-diene rubber (EPDM), epichlorohydrin rubber (ECO), acrylonitrile-butadiene rubber (NBR), silicone rubber, Fluoro rubber, natural rubber (NR), etc., or a mixture of one or more of these.

The roller member 10 can also be made of a material that integrates spongy elastic body and solid rubber or solid resin. Foamed rubber such as foamed NBR (nitrile rubber) or foamed EPDM (ethylene-propylene rubber) can be used as spongy elastic material. Soft polyurethane foam is also suitable as sponge urethane. NBR (nitrile rubber) and EPDM (ethylene-propylene rubber) can be used as solid rubber materials. Phenol, coumarone, acetylene, and terpene resins can also be used as solid resins.

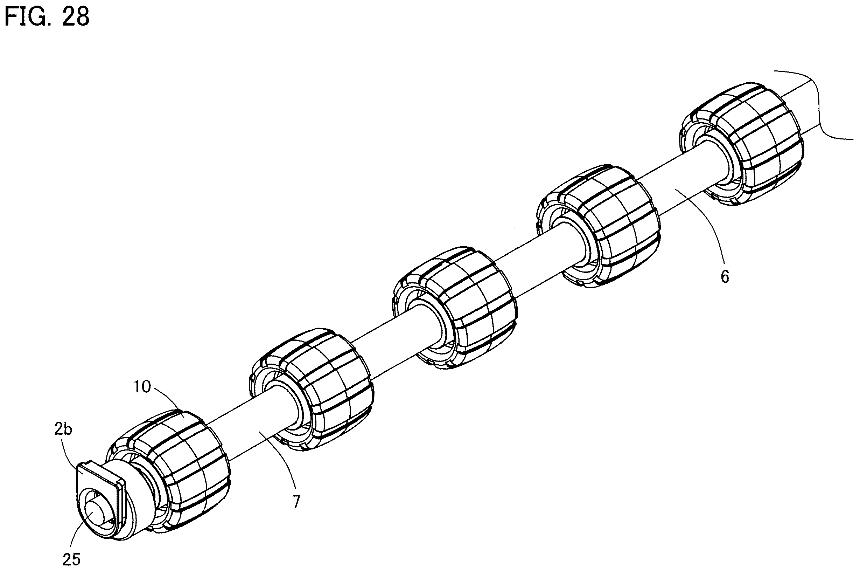

Fig. 28 shows another embodiment in which the diameter D and length A of the conveying roller are double of the present embodiment. It is used for conveying larger objects.

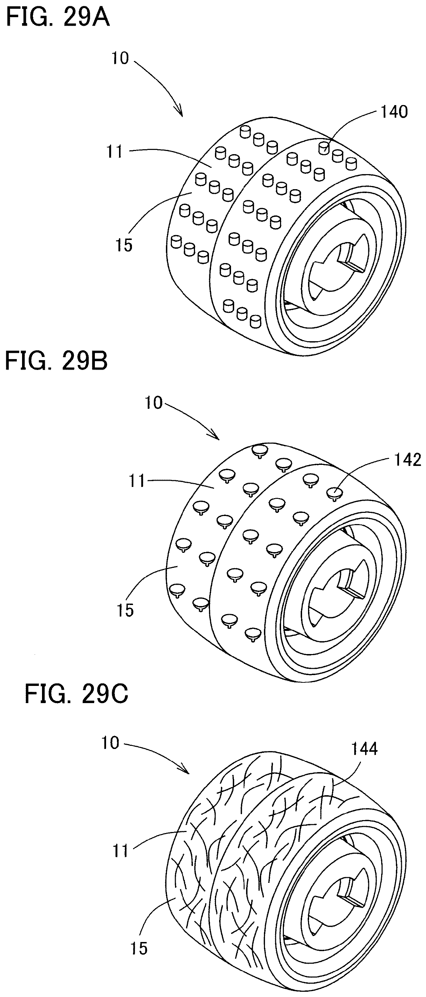

As a further example of the roller member 10, convex portions 140 instead of grooves are provided on the outer circumference 15 of the roller member, as shown in Fig. 29A. Alternatively, suckers 142 can be provided as shown in Fig. 29B. As shown in Fig. 29C, the outer circumference of the roller member 10 can be applied crepe treatment to make a squeezed shape 144.

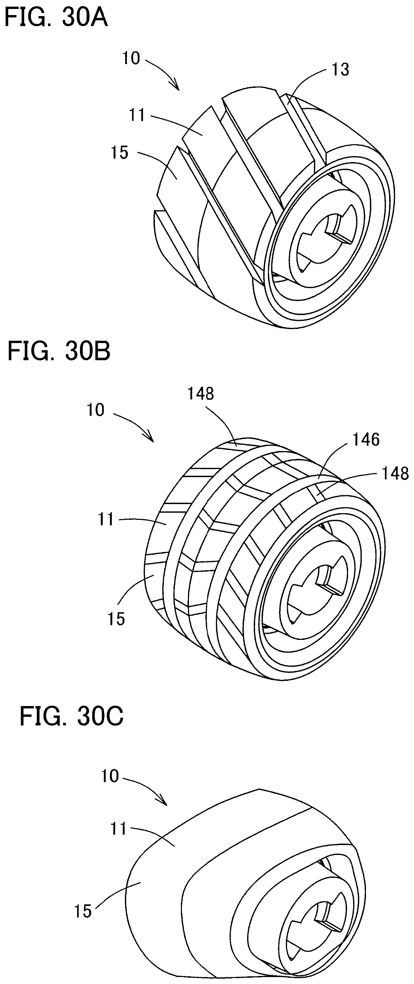

In addition, grooves 13 of the roller member 10 can be placed obliquely, as shown in Fig. 30A. Furthermore, as shown in Fig. 30B, grooves 146 can be placed circumferentially on the outer circumference 15 of the roller member and grooves 148 can be placed diagonally in the length A direction.

The roller member 10 can also have an eccentric outer body 11 as shown in Fig. 30C. Use of this roller member 10 provides vibration to the conveyed objects, thus preventing them from overlapping each other.

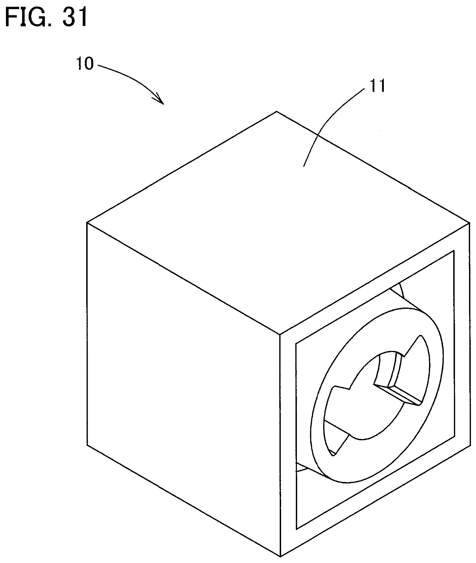

Furthermore, to eliminate overlap between conveyed objects, an outer body 11 of the roller member 10 can be square shaped, as shown in Fig. 31. According to the roller member 10 of the present aspect, the conveyed objects can be vibrated, and when the objects are overlapped each other, the overlap can be removed.

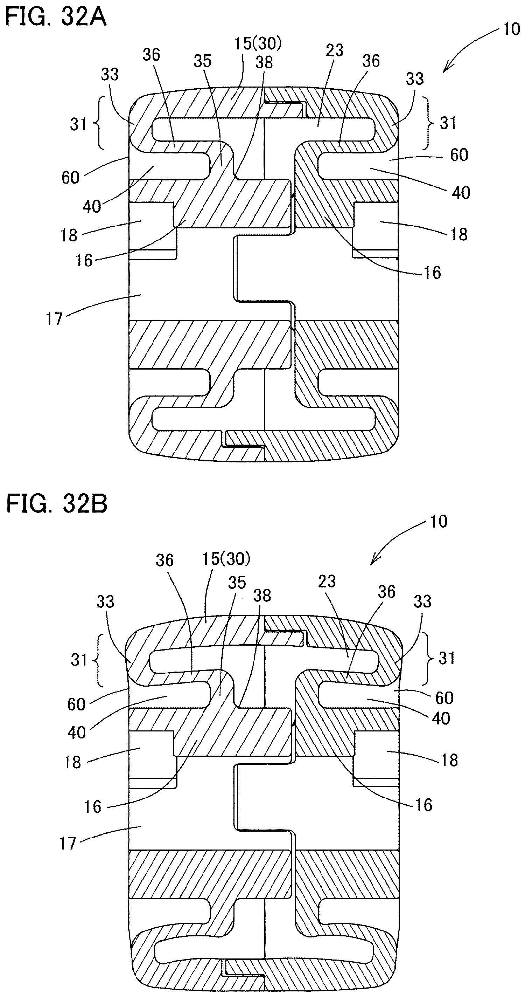

Further, the roller member 10 can be made without the reinforcing member 12 in the cavity 23, as shown in Fig. 32.

When an axial force is applied to the roller member 10, the axial length A of the roller member 10 can be changed to compensate for the fixation.

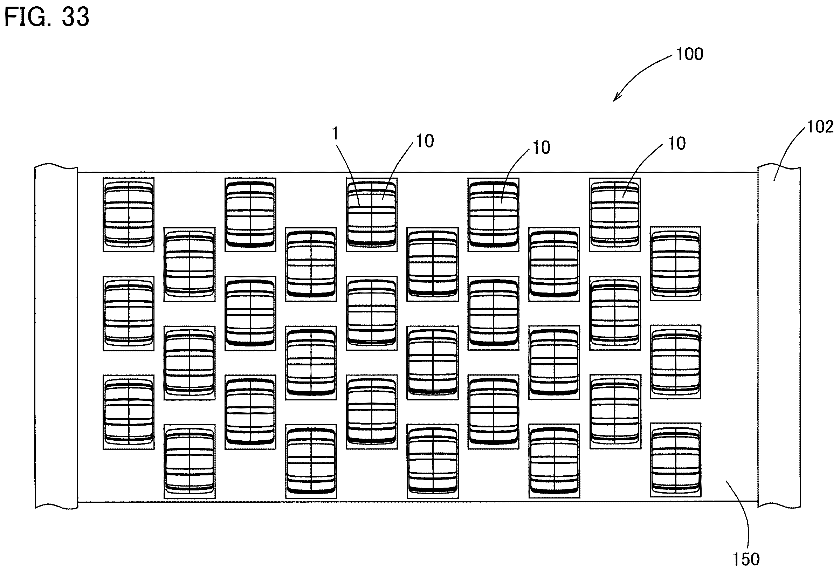

As shown in Fig. 33, a top plate 150 can also be installed on the conveyor device 100. The top plate 150 has holes only in the area corresponding to the roller members 10 so that the roller members 10 are exposed, and the top plate 150 covers the area other than the roller members 10. In this way, the gap is almost eliminated, preventing objects with sharp parts from having their sharp parts fall into the gap between the roller members 10 to impair conveyance.

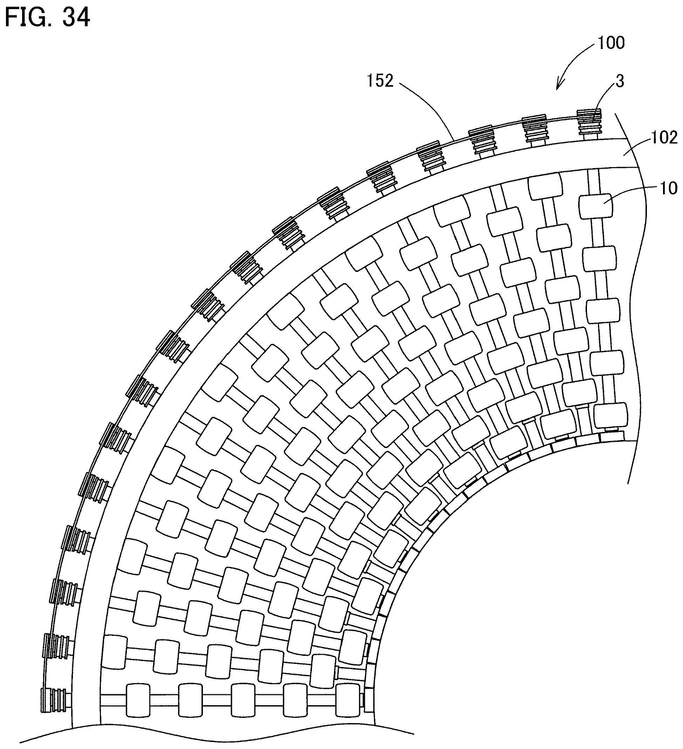

As shown in Fig. 34, when the conveyor device 100 has a curved passage, the pulley member 3 and transmission belt 152 for rotating a plurality of roller members 10 may be mounted around the perimeter of the curved passage and outside the frame piece 102.

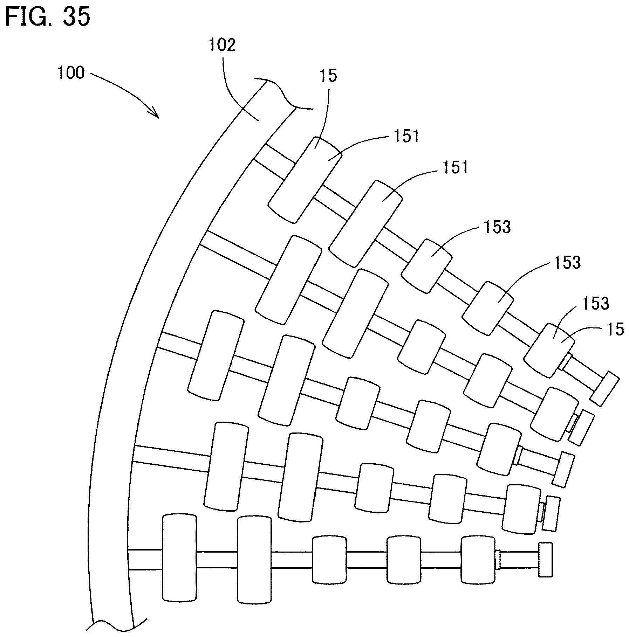

Furthermore, as shown in Fig. 35, when the conveyor device 100 has a curved passage, the diameter of the outer circumference 15 of the roller member 151 located on the outer side can be larger than the diameter of the outer circumference 15 of the roller member 153 located on the inner side. By doing so, the speed of the outer side roller member 151 and that of the inner side roller member 153 are roughly equivalent, enabling smooth conveyance of an object. The diameter of the outer circumference 15 of the roller member can be gradually enlarged from the inner to the outer circumference.

The geared motor 110 shown in Figs. 14 and 21 may be flat in shape. The flat motor may be installed on the outside of the frame.

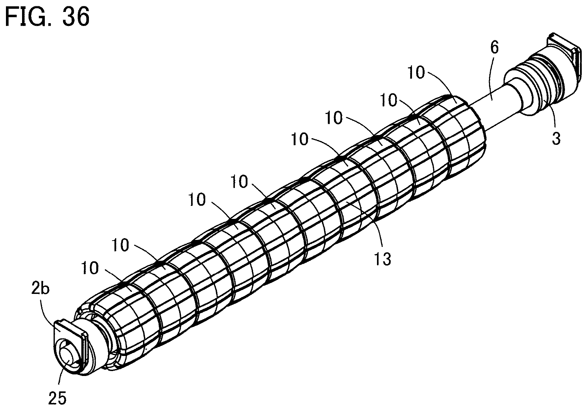

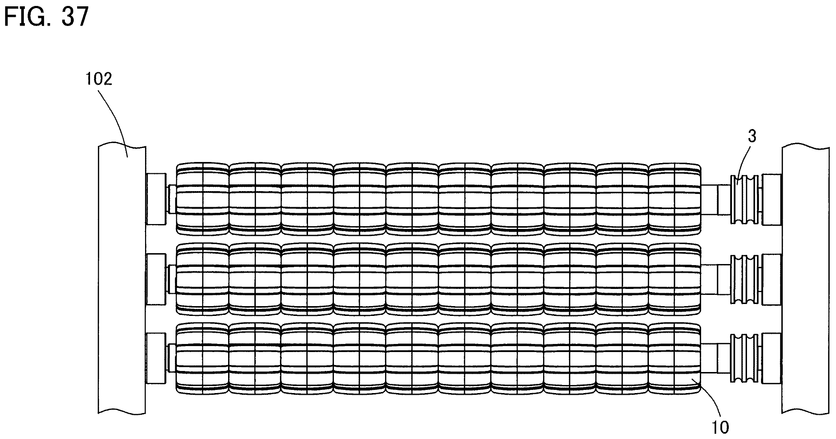

As shown in Figs. 36 and 37, the roller members 10 can be placed without gaps between them.

The conveying roller 1 of the present embodiment can be used in stacker cranes in addition to use at a conveyor device.

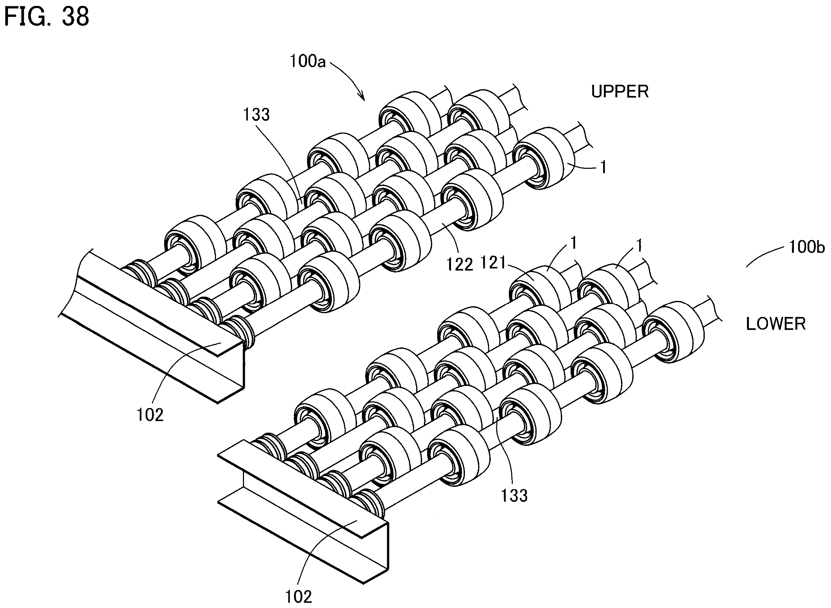

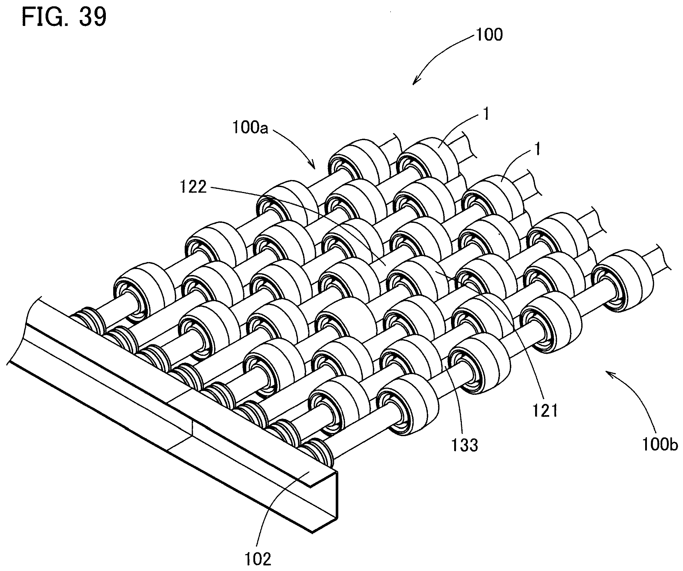

Further, the conveyor device 100 of the present embodiment can be used for equipment with a lifting and lowering function, as shown in Figs. 38 and 39. For example, a conveyor device (first conveyor device) 100a is laid out on a fixed floor and a conveyor device system (second conveyor device) 100b is installed on a lifting and lowering device. When the elevator reaches the fixed floor with the running of the lifting and lowering device as shown in Fig. 39, the large diameter portion 121 of the conveying roller 1 on the end portion of the first conveyor device 100b enters the position of the small diameter portion 122 of the conveying roller 1 on the end portion of the second conveyor device 100a. Therefore, the conveyor device100a on the fixed floor and the conveyor device 100b on the lifting device are connected in a single line, and the gap between them is minimized.

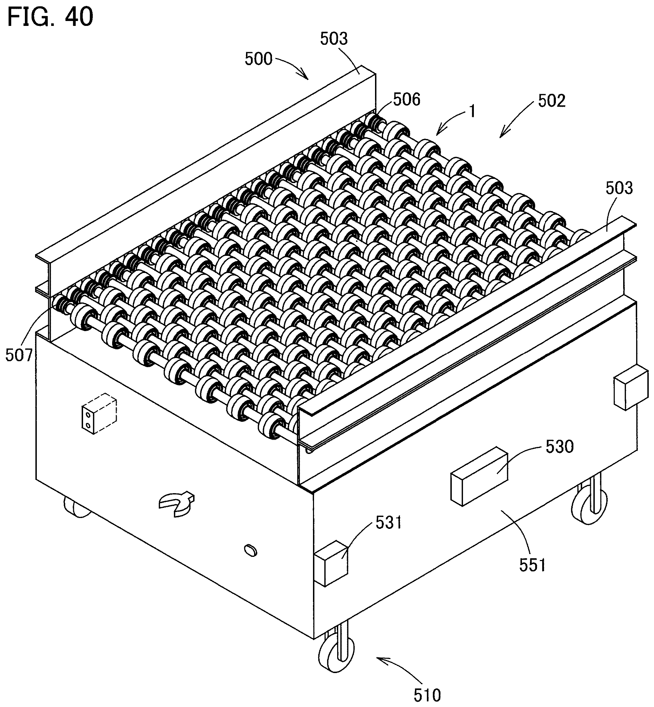

Furthermore, the conveying roller 1 can be used in an unmanned conveyance vehicle 500, as shown in Figure 40. The unmanned conveyance vehicle 500 has a functional unit 502 for moving an object or changing the posture of the object on the unmanned conveyance vehicle 500, a self-moving means 510 for moving the unmanned conveyance vehicle 500 itself, an individual control unit 530, and a connector 531. The functional unit 502 is installed on a cart section 551.

The functional unit 502 uses a conveying roller 1, and a plurality of the conveying rollers 1 that convey an object are axially supported between a pair of side frames 503, 503 that are arranged at the both sides of the conveying rollers 1 in parallel with a predetermined interval in the conveying direction. At least one of the conveying rollers 1 is connected to and driven by a motor not shown. The conveying rollers 1 are connected to each other by a transmission belt 506 and pulleys 507, and all conveying rollers 1 are driven rotationally.

The conveyor device 100 described above is a linear connection of a plurality of short conveyor devices 120. However, some of them are arranged in an inclined position, the conveyor devise creates a unique action. That is, some short conveyor devices are positioned in an inclined posture viewed from above with respect to the traveling direction. Further, the short conveyor devices are provided with a straight guide member.

When the conveyor device conveys an object and the object reaches the area of the short conveyor device, the object travels in an oblique direction and reaches one of the guide members. That is, the short conveyor device is installed in an inclined position viewed from above, and each conveying roller is inclined with respect to its original straight direction. In detail, the conveying direction of the short conveyor device itself is inclined with respect to the front and rear short conveyor devices, and the object travels in an oblique direction. Then, the object comes in contact with the guide member and travels along the guide member.

Thus, according to the conveyor device of the present embodiment, an object can be pulled in one direction.

The same effect can be expected even if this configuration does not use the conveying roller (rotary member for conveyance) 1 shown in Fig. 1, etc. That is, the configuration can be applied to a conveyor device provided with rows of known cylindrical rollers.

The conveyor device of the present embodiment is for use in the configuration where multiple conveyor devices are lined up to configure a series of a conveying passage. The conveyor devices in some areas are provided with a plurality of conveying rollers arranged in parallel, and the conveying rollers are installed perpendicular to the frame. The conveyor devices in the areas are arranged obliquely as a whole.

The present disclosure includes the following items.

### (Item 1)

A rotary member for conveyance that comes in contact with an object to move the object,
comprising: a shaft member; and a roller member,
the roller member comprising:
   an outer circumference that comes in contact with the object; and
   a boss part that allows the shaft member to be inserted thereinto,
   a cavity being provided between the outer circumference and the boss part,
   a neck section being provided between the outer circumference and the boss part.

### (Item 2)

The rotary member for conveyance according to item 1, wherein a wall thickness in a vicinity of the neck section is thinner than a wall thickness of the outer circumference.

### (Item 3)

A rotary member for conveyance that comes in contact with an object to move the object,
comprising: a shaft member; and a roller member,
the roller member comprising:
   an outer circumference that comes in contact with the object; and
   a boss part that allows the shaft member to be inserted thereinto,
   a cavity being provided between the outer circumference and the boss part,
   a connecting part that extends axially being provided between the outer circumference and the boss part.

### (Item 4)

The rotary member for conveyance according to item 3, wherein a wall thickness of the connecting part is thinner than a wall thickness of the outer circumference.

### (Item 5)

The rotary member for conveyance according to any one of items 1 to 4, wherein the roller member comprises:
a perimeter wall constituting the outer circumference; and
a connecting wall that connects the perimeter wall to the boss part,
the connecting wall comprising:
   a side wall that extends from an end portion of the perimeter wall toward the boss part;
   a longitudinal wall that is erected radially from a position of the boss part, the position being located more center than the end portion of the perimeter wall; and
   a joining wall that connects the side wall to the longitudinal wall.

### (Item 6)

The rotary member for conveyance according to item 5, wherein a wall thickness of the joining wall is thinner than a wall thickness of the perimeter wall.

### (Item 7)

The rotary member for conveyance according to any one of items 1 to 6, wherein a reinforcing member is provided in the cavity, and a gap is provided between the reinforcing member and an inner surface of the outer circumference.

### (Item 8)

The rotary member for conveyance according to item 7,
wherein the reinforcing member is annular, and
wherein a groove is provided in the cavity, the reinforcing member being engaged with the groove.

### (Item 9)

The rotary member for conveyance according to any one of items 1 to 8, wherein the roller member comprises a plurality of roller pieces, the roller pieces being combined together to constitute the roller member.

### (Item 10)

The rotary member for conveyance according to any one of items 1 to 9, comprising a plurality of the roller members each having an uneven surface,
the shaft member being inserted into the roller members in a different posture where the uneven surface has a different phase.

### (Item 11)

The rotary member for conveyance according to any one of items 1 to 10,
wherein the shaft member is provided with the roller member and an attached member, the shaft member being configured to be engaged with the roller member and/ or any of the attached members to allow the roller member and the attached member to rotate integrally, and
wherein the attached member is chosen from following members:
   (1) a space retaining member provided between the roller members;
   (2) a passive side engaging member receiving power transmission from the drive member;
   (3) a drive side engaging member transmitting power to another member; and
   (4) a positioning member.

### (Item 12)

The rotary member for conveyance according to any one of items 1 to 11, wherein the rotary member for conveyance includes a plurality of the roller members that are directly or indirectly engaged with each other, so that the plurality of the roller members rotate integrally.

### (Item 13)

The rotary member for conveyance according to any one of items 1 to 12,
wherein the shaft member is provided with the roller member and an attached member, the shaft member being configured to be engaged with the roller member and/ or any of the attached members to regulate the axial movement of the shaft member, and
wherein the attached member is chosen from following members:
   (1) a space retaining member provided between the roller members;
   (2) a passive side engaging member receiving power transmission from the drive member;
   (3) a drive side engaging member transmitting power to another member, and
   (4) a positioning member.

### (Item 14)

A conveyor device including the rotary member for conveyance according to any one of items 1 to 13 arranged in parallel.

### (Item 15)

The conveyor device according to item 14, wherein a support member is provided under the rotary member for conveyance, the support member normally being not in contact with the rotary member for conveyance, the support member coming in contact with the rotary member for conveyance when the rotary member for conveyance bends.

### (Item 16)

A roller member that allows a shaft member to be inserted thereinto for rotation of the roller member, thereby coming in contact with an object to move the object,
the roller member comprising:
an outer circumference that comes in contact with the object; and
a boss part that allows the shaft member to be inserted thereinto,
wherein a cavity is provided between the outer circumference and the boss part, and
wherein a neck section is provided between the outer circumference and the boss part.

### (Item 17)

A roller member that allows a shaft member to be inserted thereinto for rotation of the roller member, thereby coming in contact with an object to move the object,
the roller member comprising:
an outer circumference that comes in contact with the object; and
a boss part that allows the shaft member to be inserted thereinto,
wherein a cavity is provided between the outer circumference and the boss part, and
wherein a connecting wall that extends axially is provided between the outer circumference and the boss part.

### (Item 18)

The roller member according to item 16 or 17, wherein a reinforcing member is provided in the cavity, and a gap is provided between the reinforcing member and an inner surface of the outer circumference.

### (Item 19)

The rotary member for conveyance according to item 10,
wherein the roller member comprises: a hollow outer body; and a reinforcing member, and
wherein numerous grooves extending in an axial direction are provided on the outer circumference of the outer body, the grooves existing only on both end portions of the outer circumference in the axial direction.

### (Item 20)

The rotary member for conveyance according to item 19, wherein the grooves exist only until a position approximately 1/4 length of the outer circumference from an end of the outer circumference in the axial direction.

### (Item 21)

A conveyor device arranged the rotary members for conveyance according to any one of items 1 to 13 in parallel,
wherein the rotary members for conveyance each have a large diameter portion and a small diameter portion,
wherein the rotary members for conveyance include a first and a second rotary members for conveyance arranged adjacently, and
wherein the large diameter portion of the first rotary member for conveyance is located at a position corresponding to the small diameter portion of the second rotary member for conveyance.

### (Item 22)

A conveyor device that includes a plurality of independent short conveyor devices,
wherein the short conveyor device is provided with the rotary members for conveyance according to any one of items 1 to 13 in parallel,
wherein the rotary members for conveyance each have a large diameter portion and a small diameter portion,
wherein the short conveyor devices are connected in series to constitute a series of a conveying passage,
wherein the plurality of short conveyor devices include a first and a second short conveyor devices that are connected in series, and
wherein at a connection portion of the first and the second short conveyor devices, the large diameter portion of the rotary member for conveyance disposed at an end of the first short conveyor device is located at a position corresponding to the small diameter portion of rotary member for the conveyance disposed at an end of the second short conveyor device.

### EXPLANATION OF REFERENCE SIGNS

1: Conveying roller (Rotary member for conveyance)
3: Pulley member
10, 45, 46: Roller member
11: Outer body
12: Reinforcing member
13: Groove (uneven)
15: Outer circumference
16: Boss part
23: Cavity
25: Rotating core (shaft member)
30: Perimeter wall
33: Side wall
35: Longitudinal wall
36: Joining wall (connecting part)
38: Groove
40: Gap
60: Neck section
100: Conveyor device
120: Short conveyor device
121: Large diameter portion
122: Small diameter portion

## Claims

1. A rotary member for conveyance that comes in contact with an object to move the object, comprising: a shaft member; and a roller member,
the roller member comprising:
an outer circumference that comes in contact with the object; and
a boss part that allows the shaft member to be inserted thereinto,
a cavity being provided between the outer circumference and the boss part,
a neck section being provided between the outer circumference and the boss part.

2. The rotary member for conveyance according to claim 1,
wherein a wall thickness in a vicinity of the neck section is thinner than a wall thickness of the outer circumference.

3. A rotary member for conveyance that comes in contact with an object to move the object,
comprising: a shaft member; and a roller member,
the roller member comprising:
an outer circumference that comes in contact with the object; and
a boss part that allows the shaft member to be inserted thereinto,
a cavity being provided between the outer circumference and the boss part,
a connecting part that extends axially being provided between the outer circumference and the boss part.

4. The rotary member for conveyance according to claim 3, wherein a wall thickness of the connecting part is thinner than a wall thickness of the outer circumference.

5. The rotary member for conveyance according to claim 1 or 3,
wherein the roller member comprises:
a perimeter wall constituting the outer circumference; and
a connecting wall that connects the perimeter wall to the boss part,
the connecting wall comprising:
a side wall that extends from an end portion of the perimeter wall toward the boss part;
a longitudinal wall that is erected radially from a position of the boss part, the position being located more center than the end portion of the perimeter wall; and
a joining wall that connects the side wall to the longitudinal wall.

6. The rotary member for conveyance according to claim 5, wherein a wall thickness of the joining wall is thinner than a wall thickness of the perimeter wall.

7. The rotary member for conveyance according to claim 1 or 3, wherein a reinforcing member is provided in the cavity, and a gap is provided between the reinforcing member and an inner surface of the outer circumference.

8. The rotary member for conveyance according to claim 7,
wherein the reinforcing member is annular, and
wherein a groove is provided in the cavity, the reinforcing member being engaged with the groove.

9. The rotary member for conveyance according to claim 1 or 3, wherein the roller member comprises a plurality of roller pieces, the roller pieces being combined together to constitute the roller member.

10. The rotary member for conveyance according to claim 1 or 3, comprising a plurality of the roller members each having an uneven surface,
the shaft member being inserted into the roller members in a different posture where the uneven surface has a different phase.

11. The rotary member for conveyance according to claim 1 or 3,
wherein the shaft member is provided with the roller member and an attached member, the shaft member being configured to be engaged with the roller member and/ or any of the attached members to allow the roller member and the attached member to rotate integrally, and
wherein the attached member is chosen from following members:
(1) a space retaining member provided between the roller members;
(2) a passive side engaging member receiving power transmission from the drive member;
(3) a drive side engaging member transmitting power to another member; and
(4) a positioning member.

12. The rotary member for conveyance according to claim 1 or 3, wherein the rotary member for conveyance includes a plurality of the roller members that are directly or indirectly engaged with each other, so that the plurality of the roller members rotate integrally.

13. The rotary member for conveyance according to claim 1 or 3,
wherein the shaft member is provided with the roller member and an attached member, the shaft member being configured to be engaged with the roller member and/ or any of the attached members to regulate an axial movement of the shaft member, and
wherein the attached member is chosen from following members:
(1) a space retaining member provided between the roller members;
(2) a passive side engaging member receiving power transmission from the drive member;
(3) a drive side engaging member transmitting power to another member, and
(4) a positioning member.

14. A conveyor device including the rotary member for conveyance according to claim 1 or 3 arranged in parallel.

15. The conveyor device according to claim 14, wherein a support member is provided under the rotary member for conveyance, the support member normally being not in contact with the rotary member for conveyance, the support member coming in contact with the rotary member for conveyance when the rotary member for conveyance bends.

16. A roller member that allows a shaft member to be inserted thereinto for rotation of the roller member, thereby coming in contact with an object to move the object,
the roller member comprising:
an outer circumference that comes in contact with the object; and
a boss part that allows the shaft member to be inserted thereinto,
wherein a cavity is provided between the outer circumference and the boss part, and
wherein a neck section is provided between the outer circumference and the boss part.

17. A roller member that allows a shaft member to be inserted thereinto for rotation of the roller member, thereby coming in contact with an object to move the object,
the roller member comprising:
an outer circumference that comes in contact with the object; and
a boss part that allows the shaft member to be inserted thereinto,
wherein a cavity is provided between the outer circumference and the boss part, and
wherein a connecting wall that extends axially is provided between the outer circumference and the boss part.

18. The roller member according to claim 16 or 17, wherein a reinforcing member is provided in the cavity, and a gap is provided between the reinforcing member and an inner surface of the outer circumference.

19. The rotary member for conveyance according to claim 10,
wherein the roller member comprises: a hollow outer body; and a reinforcing member, and
wherein numerous grooves extending in an axial direction are provided on the outer circumference of the outer body, the grooves existing only on both end portions of the outer circumference in the axial direction.

20. The rotary member for conveyance according to claim 19, wherein the grooves exist only until a position approximately 1/4 length of the outer circumference from an end of the outer circumference in the axial direction.

21. A conveyor device arranged the rotary members for conveyance according to claim 1 or 3 in parallel,
wherein the rotary members for conveyance each have a large diameter portion and a small diameter portion,
wherein the rotary members for conveyance include a first and a second rotary members for conveyance arranged adjacently, and
wherein the large diameter portion of the first rotary member for conveyance is located at a position corresponding to the small diameter portion of the second rotary member for conveyance.

22. A conveyor device that includes a plurality of independent short conveyor devices,
wherein the short conveyor device is provided with the rotary members for conveyance according to claim 1 or 3 in parallel,
wherein the rotary members for conveyance each have a large diameter portion and a small diameter portion,
wherein the short conveyor devices are connected in series to constitute a series of a conveying passage,
wherein the plurality of short conveyor devices include a first and a second short conveyor devices that are connected in series, and
wherein at a connection portion of the first and the second short conveyor devices, the large diameter portion of the rotary member for conveyance disposed at an end of the first short conveyor device is located at a position corresponding to the small diameter portion of the rotary member for conveyance disposed at an end of the second short conveyor device.
